(19) **Europäisches Patentamt**
**European Patent Office**
**Office européen des brevets**

(11) **EP 4 521 310 A1**

(12) **EUROPEAN PATENT APPLICATION**
published in accordance with Art. 153(4) EPC

(43) Date of publication:
**12.03.2025 Bulletin 2025/11**

(51) International Patent Classification (IPC):
**G06N 20/00** (2019.01)   **G06N 3/04** (2023.01)
**G06N 3/08** (2023.01)

(21) Application number: **23806617.9**

(22) Date of filing: **29.03.2023**

(86) International application number:
**PCT/CN2023/084902**

(87) International publication number:
**WO 2023/221659 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.05.2022 CN 202210551668**

(71) Applicant: **Huawei Technologies Co., Ltd.**
**Shenzhen, Guangdong 518129 (CN)**

(72) Inventors:
• **ZHU, Jieming**
**Shenzhen, Guangdong 518129 (CN)**
• **DENG, Liqun**
**Shenzhen, Guangdong 518129 (CN)**
• **ZHAO, Zhou**
**Hangzhou, Zhejiang 310058 (CN)**
• **YAO, Dong**
**Hangzhou, Zhejiang 310058 (CN)**
• **DONG, Zhenhua**
**Shenzhen, Guangdong 518129 (CN)**

(74) Representative: **Maiwald GmbH**
**Engineering**
**Elisenhof**
**Elisenstrasse 3**
**80335 München (DE)**

(54) **REPRESENTATION LEARNING METHOD AND RELATED DEVICE**

(57) Embodiments of this application disclose a representation learning method and a related device in the field of artificial intelligence. The method includes: obtaining a dataset of to-be-learned data, where the dataset includes at least one subset, the subset includes data segments of K scales, and in the subset, a data segment of an $i^{th}$ scale is a part of a data segment of an $(i+1)^{th}$ scale; inputting the dataset into an encoder, and extracting features of the data segments based on a parameter of the encoder to obtain representation vectors corresponding to data segments of various scales; inputting the representation vectors into an interaction module, and performing, based on a parameter of the interaction module, information interaction on representation vectors corresponding to data segments of adjacent scales in the subset, to obtain fused representation vectors corresponding to the data segments of various scales; constructing an objective function based on the fused representation vectors; and optimizing the objective function to adjust the parameter of the encoder and the parameter of the interaction module, so that the encoder and the interaction module learn a high-quality representation vector of the to-be-learned data.

A training device obtains a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K−1, and there are one or more data segments of each scale — S31

The training device inputs the dataset into an encoder, and extracts features of the data segments based on a parameter of the encoder, to obtain representation vectors corresponding to data segments of various scales — S32

The training device inputs the representation vectors into an interaction module, and performs, based on a parameter of the interaction module, information interaction on representation vectors corresponding to data segments of adjacent scales in the subset, to obtain fused representation vectors corresponding to the data segments of various scales — S33

The training device constructs an objective function based on the fused representation vectors — S34

The training device optimizes the objective function to adjust the parameter of the encoder and the parameter of the interaction module, so that the encoder and the interaction module learn a representation vector of the to-be-learned data — S35

FIG. 3

## Description

This application claims priority to Chinese Patent Application No. 202210551668.X, filed with the China National Intellectual Property Administration on May 18, 2022 and entitled "REPRESENTATION LEARNING METHOD AND RELATED DEVICE", which is incorporated herein by reference in its entirety.

## TECHNICAL FIELD

The present invention relates to the field of artificial intelligence (Artificial Intelligence, AI), and in particular, to a representation learning method and a related device.

## BACKGROUND

Artificial intelligence requires a large amount of data as the basis for "thinking" and "decision-making". For example, the large amount of data is used as a "learning material" for deep learning, and computers can find rules from the data. However, obtained data, such as an audio, a video, or text, is very complex, lengthy, and variable. How to effectively extract and express features becomes an important challenge.

In machine learning, representation learning (representation learning) is a set of techniques for learning a feature: converting raw data into a form that can be effectively developed by the machine learning. This avoids manually extracting features and allows the computer to both learn how to extract features and use the features: learn how to learn.

However, in the conventional technology, quality of a representation vector learned through representation learning is not high. For example, in a scenario in which representation learning is performed on music, audio segments of same duration are usually obtained by segmenting a song file, then each audio segment is learned to obtain a representation vector of the audio segment, and then representation vectors of all the audio segments are aggregated to obtain a representation vector of an entire song. However, this aggregation method is affected by a high frequency feature, and the obtained representation vector of the entire song is indistinguishable. Alternatively, the entire song is directly learned to obtain a representation vector of the entire song, but the representation vector obtained by using this method lacks local feature information.

## SUMMARY

This application provides a representation learning method and a related device, to perform information interaction on representation vectors corresponding to data segments whose scales are different and adjacent, so as to explore potential of deeper information, so that a fine-grained representation vector of a data segment of an $i^{th}$ scale includes information about a coarse-grained representation vector of a data segment of an $(i+1)^{th}$ scale, and the coarse-grained representation vector of the data segment of the $(i+1)^{th}$ scale includes information about the fine-grained representation vector of the data segment of the $i^{th}$ scale. This can obtain a high-quality representation vector.

According to a first aspect, an embodiment of this application provides a representation learning method. The method may be applied to a training device. The method includes: obtaining a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, and i is less than or equal to K-1; inputting the dataset into an encoder, and extracting features of the data segments based on a parameter of the encoder to obtain representation vectors corresponding to data segments of various scales; inputting the representation vectors into an interaction module, and performing, based on a parameter of the interaction module, information interaction on representation vectors corresponding to data segments of adjacent scales in the subset, to obtain fused representation vectors corresponding to the data segments of various scales; constructing an objective function based on the fused representation vectors; and optimizing the objective function to adjust the parameter of the encoder and the parameter of the interaction module, so that the encoder and the interaction module learn a representation vector of the to-be-learned data.

It should be noted that an order of the $i^{th}$ scale and the $(i+1)^{th}$ scale is not limited. It may be understood that the data segment of the $i^{th}$ scale is a part of the data segment of the $(i+1)^{th}$ scale, that is, the $i^{th}$ scale is less than the $(i+1)^{th}$ scale. In the subset, a data segment of a small scale is a part of a data segment of a large scale.

There are one or more data segments of each scale. When information interaction is performed on the representation vectors corresponding to the data segments of adjacent scales in the subset, interaction may be performed on all data segments corresponding to the two scales, and information interaction may also be performed on a part of data segments in the data segments corresponding to the two scales. It may be understood that, for a quantity of data segments on which information interaction is performed, a fused representation vector corresponding to each of the quantity of data segments is output.

For example, a quantity of data segments of the $i^{th}$ scale is M, and a quantity of data segments of the $(i+1)^{th}$ scale is N. When information interaction is performed on the data segments of the $i^{th}$ scale and the $(i+1)^{th}$ scale, information interaction may be performed between the M data segments and the N data segments. In this case, a fused representation vector corresponding to each of the M data segments is output, and a fused representation vector corresponding to each of the N data segments is output. Alternatively, information interaction may be performed between the N data segments and a part of (for example, m, where m is less than M) data segments in the M data segments, a fused representation vector corresponding to each of the m data segments is output, and a fused representation vector corresponding to each of the N data segments is output. Alternatively, information interaction is performed between the M data segments and a part of (for example, n, where n is less than N) data segments in the N data segments, a fused representation vector corresponding to each of the M data segments is output, and a fused representation vector corresponding to each of the n data segments is output.

In this embodiment of this application, information interaction is performed on representation vectors corresponding to data segments whose scales are different and adjacent in a same subset, so that a representation vector of the data segment of the $i^{th}$ scale includes information about a representation vector of the data segment of the $(i+1)^{th}$ scale, and the representation vector of the data segment of the $(i+1)^{th}$ scale includes information about the representation vector of the data segment of the $i^{th}$ scale, namely, a fine-grained representation vector (for example, the representation vector of the data segment of the $i^{th}$ scale). A fused representation vector includes information about a coarse-grained representation vector (for example, the representation vector of the data segment of the $(i+1)^{th}$ scale), and a fused representation vector includes information about the fine-grained representation vector. Then, the objective function is constructed based on the fused representation vector, and the encoder and the interaction module are trained by using the objective function, so that the encoder and the interaction module can mine deeper information in the to-be-learned data, to obtain a high-quality representation vector. In other words, the obtained representation vector includes as much data information as possible that is useful for a subsequent task, so that it is easier for the encoder and the interaction module to extract useful information when a classifier or another prediction task is subsequently constructed. This improves performance of a downstream task (for example, classification). In addition, representation vectors corresponding to data frequency bands of different scales of the to-be-learned data may be learned. For example, for a song, a representation vector of the entire song may be learned, or a representation vector of an audio segment of the song may be learned. Therefore, representation vectors of different granularities may be provided for different tasks.

Optionally, the inputting the representation vectors into an interaction module, and performing, based on a parameter of the interaction module, information interaction on representation vectors corresponding to data segments of adjacent scales in the subset, to obtain fused representation vectors corresponding to the data segments of various scales includes: inputting the representation vectors into the interaction module; determining that to-be-processed scales for an $n^{th}$ time are the $i^{th}$ scale and the $(i+1)^{th}$ scale, assigning an initial value of n to 1, and cyclically performing the following operation until n=K-1, where n=i, and n is an integer greater than or equal to 1; and performing, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

In this embodiment of this application, information overlap and association exist between data segments that are of adjacent scales in a same subset, so that representation vectors are more matched in an information interaction process. Further, an order of performing information interaction on the representation vectors is determined in ascending order of scales, the information interaction is first performed on a smallest scale and a scale that is the second smallest in the subset, then the information interaction is performed on the scale that is the second smallest and a scale that is the third smallest in the subset, and so on. The information interaction is performed layer by layer in ascending order of scales, so that it can be ensured that information is gradually fused from a fine granularity to a coarse granularity in an interaction process, and hierarchical and refined information interaction is implemented. This further improves quality of the representation vector.

Optionally, when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

In this embodiment of this application, when n is an integer greater than or equal to 2, the learned and fused representation vector continues to be used for next learning representation, to ensure that information is gradually fused from a fine granularity to a coarse granularity in an interaction process, and hierarchical and refined information interaction is implemented. This further improves quality of the representation vector.

Optionally, the performing, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales includes: using the representation vector corresponding to the data segment of the $i^{th}$ scale as a first representation vector, and using the representation vector corresponding to the data segment of the $(i+1)^{th}$ scale as a second representation vector; mapping, based on the parameter of the interaction module, the first representation vector into a first query vector, and the second representation vector into a first key vector and a first value vector; calculating an attention score of the first query vector and the first key vector by using an attention mechanism, to obtain a first attention score; obtaining, based on the first value vector, the first attention score, and the first representation vector, a fused representation vector corresponding to the data segment of the $i^{th}$ scale; mapping, based on the parameter of the interaction module, the second representation vector into a second query vector, and the fused representation vector corresponding to the data segment of the $i^{th}$ scale into a second key vector and a second value vector; calculating an attention score of the second query vector and the second key vector by using the attention mechanism, to obtain a second attention score; and obtaining, based on the second value vector, the second attention score, and the second representation vector, a fused representation vector corresponding to the data segment of the $(i+1)^{th}$ scale.

In this embodiment of this application, information interaction is performed, based on the attention mechanism, on the representation vectors corresponding to the data segments of the $i^{th}$ scale and the $(i+1)^{th}$ scale, so that an important feature of the to-be-learned data can be quickly extracted.

Optionally, the obtaining a dataset of to-be-learned data includes: obtaining the to-be-learned data and a preset quantity of scale types; segmenting the to-be-learned data to obtain data segments; and segmenting a data segment of a smallest scale, until a quantity of scale types in the subset reaches the preset quantity of scale types.

In this embodiment of this application, the to-be-learned data is randomly segmented, and each segmentation is to segment a data segment of a smaller scale from a data segment of a current smallest scale. This increases scale hierarchy of same to-be-learned data, ensures association between data segments of different scales, and provides a basis for subsequent fusion of data segments of different scales.

Optionally, the constructing an objective function based on the fused representation vectors includes: obtaining an overall representation vector of other to-be-learned data, where the other to-be-learned data and the to-be-learned data are in a same batch, and the overall representation vector is a representation vector corresponding to a data segment of a largest scale in the other to-be-learned data; calculating a similarity between each fused representation vector and the overall representation vector; for each scale, selecting a fused representation vector corresponding to a lowest similarity; and constructing the objective function based on the fused representation vector that is selected.

In this embodiment of this application, data segments of different scales that have a lowest similarity to the other to-be-learned data are selected, to obtain data segments that are more differentiated between different to-be-learned data, so as to avoid redundancy during subsequent comparison learning, which accelerates convergence of the objective function.

Optionally, the constructing the objective function based on the fused representation vector that is selected includes: mapping the fused representation vector that is selected into a positive sample; mapping the overall representation vector corresponding to the other to-be-learned data in the same batch into a negative sample; and constructing, based on comparison learning, the objective function by using the positive sample and the negative sample as sub-elements of the objective function.

In this embodiment of this application, a potential representation vector is learned by maximizing mutual information between the positive sample and negative sample through the comparison learning.

Optionally, the optimizing the objective function to adjust the parameter of the encoder and the parameter of the interaction module, so that the encoder and the interaction module learn a representation vector of the to-be-learned data includes: using positive samples corresponding to two adjacent scales as a positive sample pair; calculating, by using the objective function, a first similarity between a positive sample and a negative sample corresponding to a largest scale and a second similarity of the positive sample pair; and optimizing the objective function based on the first similarity and the second similarity, to update the parameter of the encoder and the parameter of the interaction module.

In this embodiment of this application, a multi-layer comparison learning is used, that is, a representation vector of a data segment of an adjacent length is shortened and gradually transitions to a representation vector of a data segment of a largest scale (for example, an entire song), so that better clustering-like effect can be achieved.

Optionally, the to-be-learned data is audio data, text data, or video data. It may be understood that the representation learning method provided in embodiments of this application may be applied to various subdivision fields in the field of artificial intelligence, for example, a voice processing field, a computer vision field, a text processing field, and a natural language processing field.

According to a second aspect, an embodiment of this application provides a representation learning method. The method includes: obtaining a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale; inputting the dataset into a trained encoder, and extracting features of the data segments based on a parameter of the encoder to obtain representation vectors corresponding to data segments of various scales; and inputting the representation vectors into a trained interaction module, and performing, based on a parameter of the interaction module, information interaction on representation vectors corresponding to data segments of adjacent scales in the subset, to obtain fused representation vectors corresponding to the data segments of various scales, so as to complete learning of a representation vector of the to-be-learned data.

It should be noted that an order of the $i^{th}$ scale and the $(i+1)^{th}$ scale is not limited. It may be understood that the data segment of the $i^{th}$ scale is a part of the data segment of the $(i+1)^{th}$ scale, that is, the $i^{th}$ scale is less than the $(i+1)^{th}$ scale. In the subset, a data segment of a small scale is a part of a data segment of a large scale.

There are one or more data segments of each scale. When information interaction is performed on the representation vectors corresponding to the data segments of adjacent scales in the subset, interaction may be performed on all data segments corresponding to the two scales, and information interaction may also be performed on a part of data segments in the data segments corresponding to the two scales. It may be understood that, for a quantity of data segments on which information interaction is performed, a fused representation vector corresponding to each of the quantity of data segments is output.

For example, a quantity of data segments of the $i^{th}$ scale is M, and a quantity of data segments of the $(i+1)^{th}$ scale is N. When information interaction is performed on the data segments of the $i^{th}$ scale and the $(i+1)^{th}$ scale, information interaction may be performed between the M data segments and the N data segments. In this case, a fused representation vector corresponding to each of the M data segments is output, and a fused representation vector corresponding to each of the N data segments is output. Alternatively, information interaction may be performed between the N data segments and a part of (for example, m, where m is less than M) data segments in the M data segments, a fused representation vector corresponding to each of the m data segments is output, and a fused representation vector corresponding to each of the N data segments is output. Alternatively, information interaction is performed between the M data segments and a part of (for example, n, where n is less than N) data segments in the N data segments, a fused representation vector corresponding to each of the M data segments is output, and a fused representation vector corresponding to each of the n data segments is output.

In this embodiment of this application, the trained encoder and the interaction module perform information interaction on representation vectors corresponding to data segments whose scales are different and adjacent in a same subset, so that a representation vector of the data segment of the $i^{th}$ scale includes information about a representation vector of the data segment of the $(i+1)^{th}$ scale, and the representation vector of the data segment of the $(i+1)^{th}$ scale includes information about the representation vector of the data segment of the $i^{th}$ scale. This can obtain a high-quality representation vector. In other words, the obtained representation vector includes as much data information as possible that is useful for a subsequent task, so that it is easier to extract useful information when a classifier or another prediction task is subsequently constructed. This improves performance of a downstream task (for example, classification). In addition, representation vectors corresponding to data frequency bands of different scales of the to-be-learned data may be learned. For example, for a song, a representation vector of the entire song may be learned, or a representation vector of an audio segment of the song may be learned. Therefore, representation vectors of different granularities may be provided for different tasks.

Optionally, the inputting the representation vectors into a trained interaction module, and performing, based on a parameter of the interaction module, information interaction on representation vectors corresponding to data segments of adjacent scales in the subset, to obtain fused representation vectors corresponding to the data segments of various scales includes: inputting the representation vectors into the trained interaction module; determining that to-be-processed scales for an $n^{th}$ time are the $i^{th}$ scale and the $(i+1)^{th}$ scale, assigning an initial value of n to 1, and cyclically performing the following operation until n=K-1, where n=i, and n is an integer greater than or equal to 1; and performing, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

In this embodiment of this application, the interaction module performs information interaction layer by layer in ascending order of scales, so that it can be ensured that information is gradually fused from a fine granularity to a coarse granularity in an interaction process, and hierarchical and refined information interaction is implemented. This further improves quality of the representation vector.

Optionally, when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

In this embodiment of this application, the interaction module continues to use the learned and fused representation vector for next learning representation, to ensure that information is gradually fused from a fine granularity to a coarse granularity in an interaction process, and hierarchical and refined information interaction is implemented. This further improves quality of the representation vector.

Optionally, the performing, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales includes: using the representation vector corresponding to the data segment of the $i^{th}$ scale as a first representation vector, and using a representation vector corresponding to the data segment of the $(i+1)^{th}$ scale as a second representation vector; mapping, based on the parameter of the trained interaction module, the first representation vector into a first query vector, and the second representation vector into a first key vector and a first value vector; calculating an attention score of the first query vector and the first key vector by using an attention mechanism, to obtain a first attention score; obtaining, based on the first value vector, the first attention score, and the first representation vector, a fused representation vector corresponding to the data segment of the $i^{th}$ scale; mapping, based on the parameter of the trained interaction module, the second representation vector into a second query vector, and the fused representation vector corresponding to the data segment of the $i^{th}$ scale into a second key vector and a second value vector; calculating an attention score of the second query vector and the second key vector by using the attention mechanism, to obtain a second attention score; and obtaining, based on the second value vector, the second attention score, and the second representation vector, a fused representation vector corresponding to the data segment of the $(i+1)^{th}$ scale.

In this embodiment of this application, the interaction module performs information interaction, based on the attention mechanism, on the representation vectors corresponding to the data segments of the $i^{th}$ scale and the $(i+1)^{th}$ scale, so that an important feature of the to-be-learned data can be quickly extracted.

Optionally, the obtaining a dataset of to-be-learned data includes: obtaining the to-be-learned data and a preset quantity of scale types; segmenting the to-be-learned data to obtain data segments; and segmenting a data segment of a smallest scale, until a quantity of scale types in the subset reaches the preset quantity of scale types.

In this embodiment of this application, the to-be-learned data is randomly segmented, and each segmentation is to segment a data segment of a smaller scale from a data segment of a current smallest scale. This increases scale hierarchy of same to-be-learned data, ensures association between data segments of different scales, and provides a basis for subsequent fusion of data segments of different scales.

According to a third aspect, an embodiment of this application provides a training device. The training device includes an obtaining module, an encoder, an interaction module, a construction module, and an optimization module. The obtaining module is configured to obtain a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale. The encoder is configured to: receive the dataset, and extract features of the data segments based on a parameter of the encoder to obtain representation vectors corresponding to data segments of various scales. The interaction module is configured to: receive the representation vectors, and perform, based on a parameter of the interaction module, information interaction on representation vectors corresponding to data segments of adjacent scales in the subset, to obtain fused representation vectors corresponding to the data segments of various scales. The construction module is configured to construct an objective function based on the fused representation vectors. The optimization module is configured to optimize the objective function to adjust the parameter of the encoder and the parameter of the interaction module, so that the encoder and the interaction module learn a representation vector of the to-be-learned data.

Optionally, the interaction module is specifically configured to: receive the representation vectors; determine that to-be-processed scales for an $n^{th}$ time are the $i^{th}$ scale and the $(i+1)^{th}$ scale, assign an initial value of n to 1, and cyclically perform the following operations until n=K-1, where n=i, and n is an integer greater than or equal to 1; and perform, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

Optionally, when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

Optionally, the performing, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales specifically includes: using the representation vector corresponding to the data segment of the $i^{th}$ scale as a first representation vector, and using the representation vector corresponding to the data segment of the $(i+1)^{th}$ scale as a second representation vector; mapping, based on the parameter of the interaction module, the first representation vector into a first query vector, and the second representation vector into a first key vector and a first value vector; calculating an attention score of the first query vector and the first key vector by using an attention mechanism, to obtain a first attention score; obtaining, based on the first value vector, the first attention score, and the first representation vector, a fused representation vector corresponding to the data segment of the $i^{th}$ scale; mapping, based on the parameter of the interaction module, the second representation vector into a second query vector, and the fused representation vector corresponding to the data segment of the $i^{th}$ scale into a second key vector and a second value vector; calculating an attention score of the second query vector and the second key vector by using the attention mechanism, to obtain a second attention score; and obtaining, based on the second value vector, the second attention score, and the second representation vector, a fused representation vector corresponding to the data segment of the $(i+1)^{th}$ scale.

Optionally, the obtaining module is specifically configured to: obtain the to-be-learned data and a preset quantity of scale types; segment the to-be-learned data to obtain data segments; and segment a data segment of a smallest scale, until a quantity of scale types in the subset reaches the preset quantity of scale types.

Optionally, the construction module is specifically configured to: obtain an overall representation vector of other to-be-learned data, where the other to-be-learned data and the to-be-learned data are in a same batch, and the overall representation vector is a representation vector corresponding to a data segment of a largest scale in the other to-be-learned data; calculate a similarity between each fused representation vector and the overall representation vector; for each scale, select a fused representation vector corresponding to a lowest similarity; and construct the objective function based on the fused representation vector that is selected.

Optionally, the constructing the objective function based on the fused representation vector that is selected includes: mapping the fused representation vector that is selected into a positive sample; mapping the overall representation vector corresponding to the other to-be-learned data in the same batch into a negative sample; and constructing, based on comparison learning, the objective function by using the positive sample and the negative sample as sub-elements of the objective function.

Optionally, the optimization module is specifically configured to: use positive samples corresponding to two adjacent scales as a positive sample pair; calculate, by using the objective function, a first similarity between a positive sample and a negative sample corresponding to a largest scale and a second similarity of the positive sample pair; and optimize the objective function based on the first similarity and the second similarity, to update the parameter of the encoder and the parameter of the interaction module.

Optionally, the to-be-learned data is audio data, text data, or video data.

According to a fourth aspect, an embodiment of this application provides an execution device. The execution device includes an obtaining module, an encoder, and an interaction module. The obtaining module is configured to obtain a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale. The encoder is configured to: receive the dataset, and extract features of the data segments based on a parameter of the encoder to obtain representation vectors corresponding to data segments of various scales, where the encoder is trained. The interaction module is configured to: receive the representation vectors, and perform, based on a parameter of the interaction module, information interaction on representation vectors corresponding to data segments of adjacent scales in the subset, to obtain fused representation vectors corresponding to the data segments of various scales, where the interaction module is trained.

Optionally, the interaction module is specifically configured to: receive the representation vectors; determine that to-be-processed scales for an $n^{th}$ time are the $i^{th}$ scale and the $(i+1)^{th}$ scale, assign an initial value of n to 1, and cyclically perform the following operations until n=K-1, where n=i, and n is an integer greater than or equal to 1; and perform, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

Optionally, when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

Optionally, the performing, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales includes: using the representation vector corresponding to the data segment of the $i^{th}$ scale as a first representation vector, and using the representation vector corresponding to the data segment of the $(i+1)^{th}$ scale as a second representation vector; mapping, based on the parameter of the trained interaction module, the first representation vector into a first query vector, and the second representation vector into a first key vector and a first value vector; calculating an attention score of the first query vector and the first key vector by using an attention mechanism, to obtain a first attention score; obtaining, based on the first value vector, the first attention score, and the first representation vector, a fused representation vector corresponding to the data segment of the $i^{th}$ scale; mapping, based on the parameter of the trained interaction module, the second representation vector into a second query vector, and the fused representation vector of the data segment of the $i^{th}$ scale into a second key vector and a second value vector; calculating an attention score of the second query vector and the second key vector by using the attention mechanism, to obtain a second attention score; and obtaining, based on the second value vector, the second attention score, and the second representation vector, a fused representation vector corresponding to the data segment of the $(i+1)^{th}$ scale.

Optionally, the obtaining module includes: obtaining the to-be-learned data and a preset quantity of scale types; segmenting the to-be-learned data to obtain data segments; and segmenting a data segment of a smallest scale, until a quantity of scale types in the subset reaches the preset quantity of scale types.

According to a fifth aspect, an embodiment of this application provides a computer device, including a memory and a processor. The memory is configured to store computer-readable instructions, and the processor is configured to read the computer-readable instructions and implement the method provided in the first aspect and the optional implementations of the first aspect or the method provided in the second aspect and the optional implementations of the second aspect.

According to a sixth aspect, an embodiment of this application provides a computer storage medium, where the computer storage medium stores computer-readable instructions, and when the computer-readable instructions are executed by a processor, the method provided in the first aspect and the optional implementations of the first aspect or the method provided in the second aspect and the optional implementations of the second aspect are implemented.

According to a seventh aspect, an embodiment of this application provides a computer program product, where the computer program product includes computer-readable instructions, and when the computer-readable instructions are executed by a processor, the method provided in the first aspect and the optional implementations of the first aspect or the method provided in the second aspect and the optional implementations of the second aspect are implemented.

According to an eighth aspect, an embodiment of this application provides a computer program product. The computer program product includes computer-readable instructions, and when the computer-readable instructions are executed by a processor, the method provided in the first aspect and the optional implementations of the first aspect or the method provided in the second aspect and the optional implementations of the second aspect are implemented.

Technical effects obtained in the second aspect, the third aspect, the fourth aspect, the fifth aspect, the sixth aspect, the seventh aspect, and the eighth aspect are similar to technical effects obtained by using corresponding technical means in the first aspect. Details are not described herein again.

## BRIEF DESCRIPTION OF DRAWINGS

To describe technical solutions in embodiments of this application or in the conventional technology more clearly, the following briefly describes the accompanying drawings used in describing embodiments or the conventional technology. It is clear that the accompanying drawings in the following descriptions show merely some embodiments of the present invention, and a person of ordinary skill in the art may still derive other drawings from these accompanying drawings without creative efforts.

FIG. 1 is a diagram of an artificial intelligence main framework according to an embodiment of this application;
FIG. 2 is a diagram of a representation learning system according to an embodiment of this application;
FIG. 3 is a schematic flowchart of a representation learning method according to an embodiment of this application;
FIG. 4 is a diagram of segmenting to-be-learned data according to an embodiment of this application;
FIG. 5 is a diagram of a structure of a convolutional neural network according to an embodiment of this application;
FIG. 6 is a schematic flowchart of an information interaction method according to an embodiment of this application;
FIG. 7 is another schematic flowchart of an information interaction method according to an embodiment of this application;
FIG. 8 is a diagram of a structure of an interaction module according to an embodiment of this application;
FIG. 9 is a schematic flowchart of a method for constructing an objective function according to an embodiment of this application;
FIG. 10 is another schematic flowchart of a method for constructing an objective function according to an embodiment of this application;
FIG. 11 is a schematic flowchart of an objective function optimization method according to an embodiment of this application;
FIG. 12 is a diagram of a process of optimizing an objective function according to an embodiment of this application;
FIG. 13 is another schematic flowchart of a representation learning method according to an embodiment of this application;
FIG. 14 is a schematic flowchart of an information interaction method according to an embodiment of this application;
FIG. 15 is another schematic flowchart of an information interaction method according to an embodiment of this application;
FIG. 16 is a diagram of a structure of an execution device according to an embodiment of this application;
FIG. 17 is a diagram of another structure of an execution device according to an embodiment of this application;
FIG. 18 (a) is a diagram of a music classification scenario according to an embodiment of this application;
FIG. 18 (b) is a diagram of a scenario of searching for a cover version of a song according to an embodiment of this application;
FIG. 18 (c) is another diagram of a scenario of searching for a cover version of a song according to an embodiment of this application;

FIG. 18 (d) is a diagram of a similar song recommendation scenario according to an embodiment of this application;
FIG. 19 is a diagram of a structure of a training device according to an embodiment of this application; and
FIG. 20 is a diagram of a structure of a training device according to an embodiment of this application.

## DESCRIPTION OF EMBODIMENTS

The following describes technical solutions in embodiments of this application with reference to the accompanying drawings in embodiments of this application. It is clear that the described embodiments are merely some rather than all embodiments of the present invention. All other embodiments obtained by a person of ordinary skill in the art based on embodiments of the present invention without creative efforts shall fall within the protection scope of the present invention.

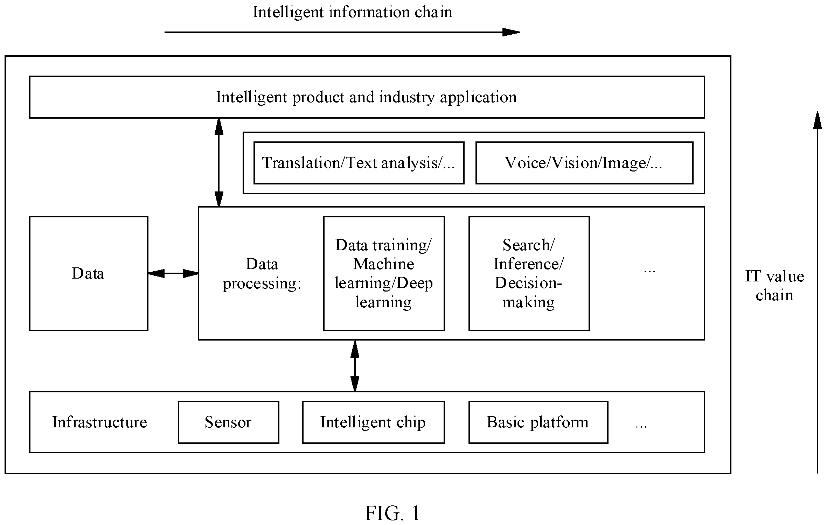

First, an overall workflow of an artificial intelligence system is described. FIG. 1 is a diagram of an artificial intelligence main framework. The main framework describes the overall workflow of the artificial intelligence system, and is applicable to a general requirement in the artificial intelligence field.

The following describes the foregoing artificial intelligence theme framework from two dimensions of an "intelligent information chain" (a horizontal axis) and an "IT value chain" (a vertical axis).

The "intelligent information chain" reflects a series of processes from data obtaining to processing. For example, the process may be a general process of intelligent information perception, intelligent information representation and formation, intelligent inference, intelligent decision-making, and intelligent execution and output. In the process, data undergoes a refinement process of "data-information-knowledge-intelligence".

The "IT value chain" reflects a value brought by artificial intelligence to the information technology industry from underlying infrastructure and information (technology providing and processing implementation) of artificial intelligence to an industrial ecological process of a system.

(1) Infrastructure:

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

The data at an upper layer of the infrastructure represents a data source in the field of artificial intelligence. The data relates to graphics, an image, voice, and text, further relates to internet of things data of a conventional device, and includes service data of a conventional system and perception data such as force, displacement, a liquid level, a temperature, and humidity.

(3) Data processing

The data processing usually includes data training, machine learning, deep learning, search, inference, decision-making, and the like.

Machine learning and deep learning may perform symbolic and formalized intelligent information modeling, extraction, preprocessing, training, and the like on data.

Inference is a process in which human intelligent inference is simulated in a computer or an intelligent system, and machine thinking and problem resolving are performed by using formal information according to an inference control. A typical function is searching and matching.

Decision-making is a process of making a decision after intelligent information is inferred, and usually provides functions such as classification, ranking, and prediction.

(4) General capability

After the data undergoes the foregoing data processing, some general capabilities may be further formed based on a data processing result. For example, the general capability may be an algorithm or a general system, for example, translation, text analysis, computer vision processing, voice recognition, and image recognition.

(5) Intelligent product and industry application

The intelligent product and industry application are a product and an application of the artificial intelligence system in various fields, and are a package of an overall solution of the artificial intelligence, so that decision-making for intelligent information is productized and an application is implemented. Application fields thereof mainly include intelligent manufacturing, intelligent transportation, intelligent home, intelligent healthcare, intelligent security, autonomous driving, a safe city, an intelligent terminal, and the like.

Embodiments of this application may be applied to an optimized design of a representation learning model. The optimized representation learning model in this application may be specifically applied to various subdivision fields in the field of artificial intelligence, for example, a voice processing field, a computer vision field, a text processing field, and a natural language processing field. Specifically, with reference to FIG. 1, data in a dataset obtained by the infrastructure may be different types of data obtained by using sensors such as a sound collection device and a camera, for example, audio data, image data, text data, or video data. The data in the dataset is converted into a representation vector by using the representation learning model optimized in this application, and the representation vector includes as much data information as possible that is useful for a subsequent task, so that it is easier for the representation vector to extract useful information when a classifier or another prediction task is subsequently constructed.

The following describes a system architecture provided in embodiments of this application.

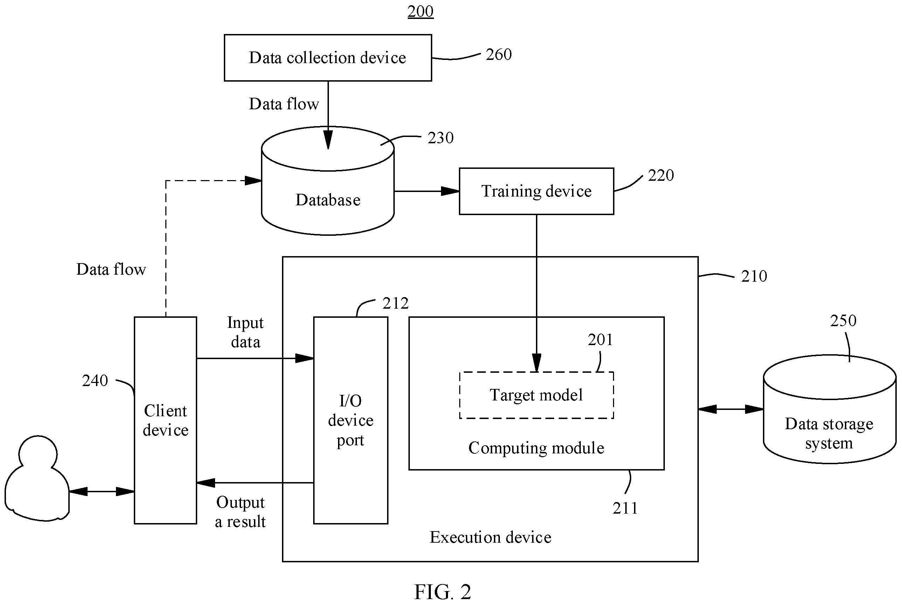

As shown in FIG. 2, an embodiment of this application provides a representation learning system 200. The representation learning system 200 includes an execution device 210, a training device 220, a database 230, a client device 240, a data storage system 250, and a data collection device 260. The execution device 210 includes a computing module 211 and an input/output (I/O) port 212.

In a training phase, the data collection device 260 may be configured to: collect a dataset (namely, a training set) of to-be-learned data, and store the training set into the database 230. The training set may include samples (which may be referred to as training data or training samples) from a plurality of source domains. Data of the training samples in the training set may be audio data, text data, image data, video data, or the like, provided that the training set meets a function of performing iterative training on a representation learning model. The training set is specifically related to a to-be-executed target task. This is not limited herein.

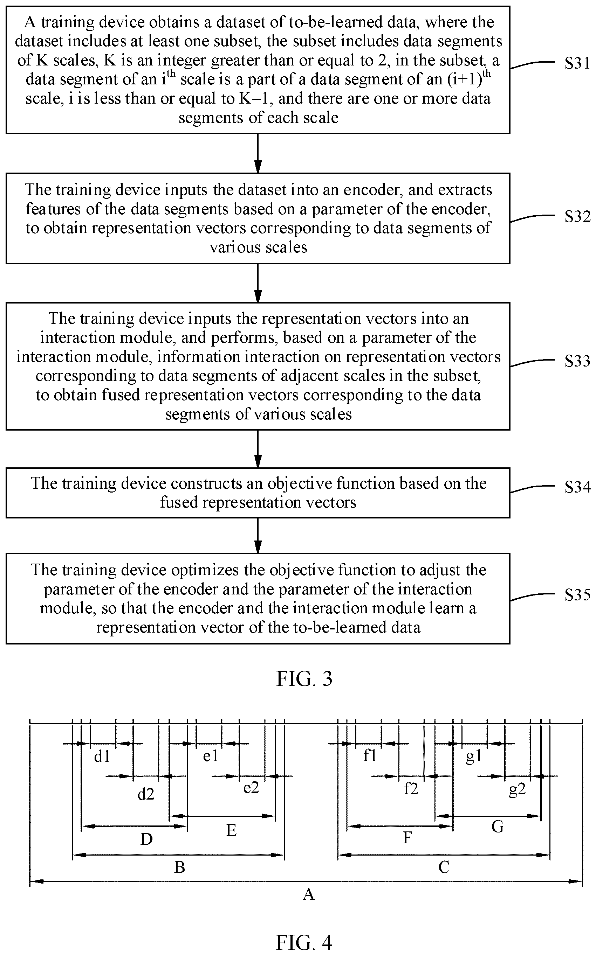

The training device 220 generates a representation learning model 201 used to convert to-be-learned data into a representation vector, and performs iterative training on the representation learning model 201 based on a training set maintained in the database 230, to obtain a mature representation learning model 201. The representation learning model 201 is a representation learning model constructed in the following implementations of this application, and the representation learning model can be used to implement a representation learning method in embodiments of this application, to obtain the representation vector of the to-be-learned data (such as audio data, video data, or text data). The following describes in more detail how the training device 220 obtains the representation learning model 201 based on the dataset of the to-be-learned data. For details, refer to related descriptions in FIG. 3 to FIG. 12.

The representation learning model 201 in this embodiment of this application may be specifically a deep learning model, for example, a convolutional neural network model. It should be noted that, in actual application, the training data maintained in the database 230 is not necessarily collected by the data collection device 260, and may also be received from another device. In addition, it should be noted that the training device 220 does not necessarily train the representation learning model 201 completely based on the training data maintained in the database 230, and may also obtain training data from the cloud or another place to perform model training. The foregoing description should not be used as a limitation on this embodiment of this application.

The representation learning model 201 obtained by the training device 220 may be used in different systems or devices, for example, used in the execution device 220 shown in FIG. 2. The execution device 220 may be a terminal, like a mobile phone terminal, a tablet computer, a notebook computer, augmented reality (augmented reality, AR)/virtual reality (virtual reality, VR), a vehicle-mounted terminal, or a television, or may be a server, a cloud, or the like. The execution device 210 exchanges data with an external device through the I/O port 212. A "user" may input data into the I/O port 212 by using the client device 240. The input data in this embodiment of this application may include to-be-learned audio data, text data, or video data that is input by the client device.

In an inference phase, the execution device 210 may invoke data, code, and the like in the data storage system 250, or may store data, an instruction, and the like in the data storage system 250. The data storage system 250 may be disposed in the execution device 210, or may be used as an external memory of the execution device 210. The computing module 211 may process, by using the mature representation learning model 201, the to-be-learned data input by the execution device 210, to obtain the representation vector of the to-be-learned data.

It should be noted that FIG. 2 is merely a diagram of a system architecture according to an embodiment of this application, and a location relationship between devices, components, modules, and the like shown in the figure does not constitute any limitation.

It can be learned from the description in FIG. 2 that this embodiment of this application includes the training phase and the inference phase. The following separately describes the training phase and the inference phase.

I. Training phase

In this embodiment of this application, the training phase is a process in which the training device 220 in FIG. 2 performs a training operation on a representation learning model by using to-be-learned data in a training set.

FIG. 3 shows a representation learning method according to an embodiment of this application. The method includes the following steps.

Step S31: A training device obtains a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale.

The training device may generate corresponding representation learning models for different targets based on different types of to-be-learned data, to provide a better result for a user. For example, if a representation learning model used to convert audio data into a representation vector needs to be obtained, the training device obtains a training set of the audio data.

In this embodiment of this application, the dataset of the to-be-learned data includes the at least one subset, and each subset may include the data segments of K scales. The scale may be understood as being used to measure a size of data, and data segments of different scales include different amounts of information. It may be understood that a data segment of a large scale includes more information than a data segment of a small scale.

For different types of to-be-learned data, a scale of the to-be-learned data may be determined based on an actual situation. For example, for audio data, a time dimension may be used as a scale division basis, and audio segments of different scales are divided based on duration. For example, audio data of 10s corresponds to one scale, and audio data of 20s corresponds to another scale. For video data, video segments of different scales may be divided based on duration. For example, a video segment of 10s corresponds to one scale, and a video segment of 20s corresponds to another scale. In some other embodiments, video segments of different scales may also be divided based on a quantity of video frames. For example, a video segment including 100 consecutive image frames corresponds to one scale, and a video segment including 1000 consecutive image frames corresponds to another scale. For text data, a character string may be used as a scale division basis, and text segments of different scales are divided based on a quantity of character strings. For example, a text segment including 100 consecutive character strings corresponds to one scale, and a text segment including 1000 consecutive character strings corresponds to another scale. It may be understood that the character string is a limited sequence including zero or more characters. A to-be-segmented character string includes an English character string, a numeric character string, a symbol character string, a pinyin character string, a Chinese character string, and the like. For example, "Good Luck", "2001", "Nihao", "https://www.huawei.com/cn/", and "Mobile phone".

In this embodiment of this application, an amount of information included in a data segment of a large scale in the subset covers an amount of information included in a data segment of a small scale. In the subset, the data segment of the $i^{th}$ scale is a part of the data segment of the $(i+1)^{th}$ scale, that is, an amount of information included in the data segment of the $(i+1)^{th}$ scale covers an amount of information included in the data segment of the $i^{th}$ scale. The K scales in the subset are sorted, and sizes of a first scale to the $(i+1)^{th}$ scale are in ascending order.

In this embodiment of this application, the to-be-learned data in the training set may also be considered as a data segment, that is, the to-be-learned data that is not segmented in the training set is also a data segment. In this case, for each subset of each piece of to-be-learned data, the subset includes the to-be-learned data and a part of the to-be-learned data.

In this embodiment of this application, the training device obtains the training set including a plurality of pieces of to-be-learned data, and the training device segments each piece of to-be-learned data in the training set, to obtain a dataset of each piece of to-be-learned data.

Before training, a trainer may preset a segmentation parameter based on a task and a training requirement, and the segmentation parameter may be a scale type. The training device obtains a preset scale type, and may obtain a preset quantity of scale types based on the preset scale type. For example, if the training device obtains three different scale types, the training device may obtain that the preset quantity of scale types is three.

In some other embodiments, the segmentation parameter may be a quantity of scale types. The training device sets different scale types based on a specified quantity of scale types. For example, if a preset quantity of scale types is three, the training device may set three different scale types. It should be noted that, in this embodiment of this application, the training device considers, by default, a scale of the to-be-learned data as a scale. The training device sets, based on the preset quantity 3 of scale types, that three different scale types include the scale of the to-be-learned data.

In some other embodiments, the segmentation parameter may further include a quantity of data segments corresponding to each scale type. For example, a quantity of data segments corresponding to a first scale is a, a quantity of data segments corresponding to a second scale is b, and a quantity of data segments corresponding to a third scale is c, where a, b, and c may be set based on an actual situation, and are all integers greater than or equal to 1; and a, b, and c may be the same, for example, all are 2, may be different, for example, a is 1, b is 2, and c is 3, or may be partially the same, for example, a and b are the same, and a and c are different.

In this embodiment of this application, after obtaining the training set and the preset quantity of scale types, the training device segments each piece of to-be-learned data in the training set based on the segmentation parameter, to obtain data segments. Each segmentation is to perform random segmentation on a data segment of a current smallest scale, until a quantity of scale types in the subset of the to-be-learned data reaches the preset quantity of scale types.

Specifically, as shown in FIG. 4, for example, the to-be-learned data is a song A of 140s. A segmentation parameter input into the training device is as follows: Scale types are respectively a first scale (8s), a second scale (30s), and a third scale (50s), and a quantity of data segments corresponding to each scale is 2. The training device further includes a fourth scale (140s) by default. In this case, scale types of the song A are 140s, 50s, 30s, and 8s. A line segment A in FIG. 4 represents the song A of 140s in the training set, and two audio segments (audio segments B and C) of the third scale (50s) are randomly obtained by segmenting the song A. The audio segments B and C respectively correspond to line segments B and C in FIG. 4. In this case, the scale types are respectively 140s and 50s, and an audio segment of a current smallest scale is the two audio segments of the third scale.

Two audio segments of the second scale are randomly obtained by segmenting each audio segment of the third scale. For example, two audio segments (audio segments D and E) of a length of 30s obtained by segmenting the line segment B respectively correspond to line segments D and E in FIG. 4. Two audio segments (audio segments F and G) of a length of 30s obtained by segmenting the line segment C respectively correspond to line segments F and G in FIG. 4. In this case, the scale types are respectively 140s, 50s, and 30s, and an audio segment of a current smallest scale is the two audio segments of the second scale.

Two audio segments of the first scale are randomly obtained by segmenting each audio segment of the second scale. For example, two audio segments (audio segments d1 and d2) of a length of 8s obtained by segmenting the line segment D respectively correspond to line segments d1 and d2 in FIG. 4. Two audio segments (audio segments e1 and e2) of a length of 8s obtained by segmenting E respectively correspond to line segments e1 and e2 in FIG. 4. Two audio segments (audio segments f1 and f2) of a length of 8s obtained by segmenting the line segment F respectively correspond to line segments f1 and f2 in FIG. 4. Two audio segments (audio segments g1 and g2) of a length of 8s obtained by segmenting the line segment G respectively correspond to line segments g1 and g2 in FIG. 4.

As shown in FIG. 4, a dataset of the song A includes four subsets. A first subset is {song A, audio segment B, audio segment D, audio segment d1, audio segment d2}, a second subset is {song A, audio segment B, audio segment E, audio segment e1, audio segment e2}, a third subset is {song A, audio segment C, audio segment F, audio segment f1, audio segment f2}, and a fourth subset is {song A, audio segment C, audio segment G, audio segment g1, audio segment g2}. An audio segment of a small scale in each subset is a part of an audio segment of a large scale, that is, the audio segment of the large scale includes the audio segment of the small scale. In the subset in this embodiment of this application, there is an inclusion relationship between audio segments of different scales, and audio segments of a same scale may have an overlapping part or may not have an overlapping part.

In this embodiment of this application, a scale type and a quantity of data segments corresponding to each scale type are set, to reduce a sample quantity and improve training efficiency. Specifically, as shown in FIG. 4, the two audio segments of 50s are obtained by segmenting the song A of 140s, and content of the two audio segments of 50s does not cover the song A of 140s.

It may be understood that, because the to-be-learned data is randomly segmented, two or more audio segments obtained through segmentation may overlap. In the foregoing example, the audio segments B and C that are obtained by randomly segmenting the song A may overlap, and the audio segments D and E that are obtained by randomly segmenting the audio segment B overlap. Each data segment is obtained through random sampling, and this manner is simple and easy to implement.

In this embodiment of this application, for each piece of to-be-learned data, after forward propagation and back propagation are performed once on the to-be-learned data in the representation learning model, a dataset of the to-be-learned data is re-obtained. Because the training device randomly segments the to-be-learned data, a dataset of the to-be-learned data that is re-obtained is different. As shown in the foregoing example, after forward propagation and back propagation are performed once on the obtained dataset of the song A in the representation learning model, the training device re-obtains a dataset of the song A, and the training device randomly segments the song A to obtain two audio segments of the third scale. The two audio segments of a length of 50s may no longer correspond to the line segments B and C in FIG. 4. Each piece of information in the song A may be randomly collected through random segmentation. Therefore, when a quantity of training samples is reduced and training efficiency is improved, a dataset of the to-be-learned data is re-collected each time, and random sampling is used, so that an amount of information in each piece of to-be-learned data can be obtained.

In this embodiment of this application, each segmentation is to segment a data segment of a smaller scale from a data segment of a current smallest scale. As shown in the foregoing example, the audio segment of 30s is obtained through segmentation from the audio segment of 50s, and then the audio segment of 8s is obtained through segmentation from the audio segment of 30s. This increases scale hierarchy of a dataset of same to-be-learned data, ensures association between data segments of different scales, and provides a basis for subsequent fusion of data segments of different scales.

Step S32: The training device inputs the dataset into an encoder, and extracts features of the data segments based on a parameter of the encoder, to obtain representation vectors corresponding to data segments of various scales.

In step S31, for each piece of to-be-learned data in the training set, the training device obtains the dataset of the to-be-learned data. The training device extracts features of the audio segments in the dataset to obtain audio features (for example, a logarithmic scale Mel spectrum of the audio segments) corresponding to the audio segments, inputs the extracted audio features into the encoder, and maps the audio features to same feature space by using the encoder, so that a representation vector of the to-be-learned data can be learned in the feature space by using a subsequent operation.

It may be understood that each audio segment is input into the encoder, and the encoder outputs an audio feature corresponding to each audio segment.

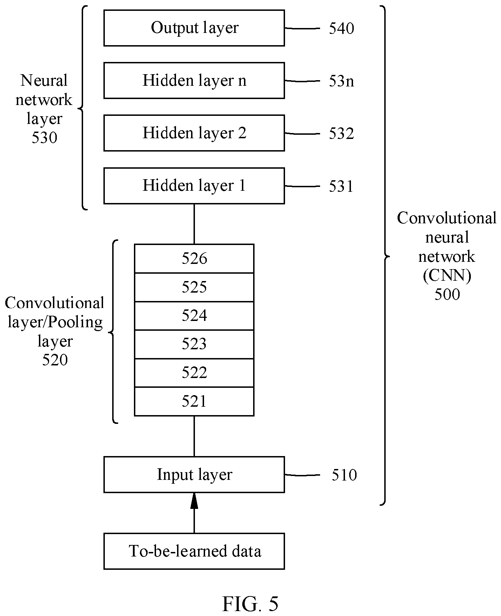

In this embodiment of this application, the encoder may use a convolutional neural network (CNN). As shown in FIG. 5, a convolutional neural network (CNN) 500 may include an input layer 510, a convolution layer/pooling layer 520, where the pooling layer is optional, and a neural network layer 530.

As shown in FIG. 5, the convolutional layer/pooling layer 520 may include layers 521 to 526 in examples. In an implementation, the layer 521 is a convolutional layer, the layer 522 is a pooling layer, the layer 523 is a convolutional layer, the layer 524 is a pooling layer, the layer 525 is a convolutional layer, and 526 is a pooling layer. In another implementation, 521 and 522 are convolutional layers, 523 is a pooling layer, 524 and 525 are convolutional layers, and 526 is a pooling layer. That is, an output of the convolutional layer may be used as an input of a subsequent pooling layer, or may be used as an input of another convolutional layer to continue a convolution operation.

The convolutional layer 521 is used as an example. The convolutional layer 521 may include a plurality of convolution operators. The convolution operator is also referred to as a kernel. In natural language processing, the convolution operator functions as a filter that extracts specific information from input voice or semantic information. The convolution operator may be a weight matrix essentially, and the weight matrix is usually predefined. The convolution layer 521 may further include a bias parameter. Weight parameters and bias parameters in these weight matrices need to be obtained through a large amount of training in actual application. Information may be extracted from an input audio segment by using weight matrices formed by weight parameters obtained through training and the bias parameters obtained through training. This helps the convolutional neural network 500 perform correct prediction.

When the convolutional neural network 500 has a plurality of convolutional layers, an initial convolutional layer (for example, the layer 521) usually extracts more general features, where the general features may also be referred to as low-level features. As a depth of the convolutional neural network 500 increases, a deeper convolutional layer (for example, the layer 526) extracts more complex features, such as high-level semantic features. Higher-level semantic features are more applicable to a problem to be resolved.

Pooling layer:

Because a quantity of training parameters often needs to be reduced, the pooling layer often needs to be periodically introduced after the convolutional layer. That is, the layers 521 to 526 shown in 520 in FIG. 5 may be as follows: One convolutional layer is followed by one pooling layer; or a plurality of convolutional layers are followed by one or more pooling layers.

Neural network layer 530:

After processing is performed at the convolutional layer/pooling layer 520, the convolutional neural network 500 still cannot output required output information. As described above, the convolutional layer/pooling layer 520 performs only feature extraction and reduces parameters brought by input data. However, to generate final output information (required type information or other related information), the convolutional neural network 500 needs to use the neural network layer 530 to generate an output of one required type or a group of required types. Therefore, the neural network layer 530 may include a plurality of hidden layers (531, and 532 to 53n shown in FIG. 5) and an output layer 540. Parameters included in the plurality of hidden layers may be obtained by performing pre-training based on related training data of a specific task type. For example, the task type may include voice or semantic recognition, classification, or generation.

After the plurality of hidden layers in the neural network layer 530, that is, the last layer of the entire convolutional neural network 500 is the output layer 540. The output layer 540 has a loss function like classification cross-entropy loss, and is specifically configured to calculate a prediction error. Once forward propagation (for example, propagation from 510 to 540 in FIG. 5 is the forward propagation) of the entire convolutional neural network 500 is completed, back propagation (for example, propagation from 540 to 510 in FIG. 5 is the back propagation) starts to update a weight parameter and a bias parameter of each layer mentioned above, to reduce a loss of the convolutional neural network 500 and an error between a result output by the convolutional neural network 500 through the output layer and an ideal result.

The convolutional neural network 500 shown in FIG. 5 is used as the encoder in this embodiment of this application. A parameter of the encoder is also a parameter (for example, a weight parameter and a bias parameter) in the convolutional neural network model 500.

It should be noted that the convolutional neural network 500 shown in FIG. 5 is used only as an example of a convolutional neural network. In a specific application, the convolutional neural network may alternatively exist in a form of another network model.

In some optional implementations, the encoder used in this embodiment of this application may include a plurality of two-dimensional convolution processing units (not shown in the figure) that are sequentially connected. The training device inputs the dataset into the encoder, and the encoder extracts audio features. When extracting the audio features, the encoder may first perform filtering processing on the audio segments to obtain a two-dimensional Mel spectrogram (Mel Spectrogram). Specifically, a one-dimensional audio data sound spectrogram may be converted into a two-dimensional Mel spectrogram by using a Mel-scale filter bank (Mel-scale filter bank). Then, a logarithm operation is performed on the Mel spectrogram to obtain two-dimensional spectrum information used to quantize sound intensity (unit: dB). Then, the two-dimensional convolution processing unit performs convolution processing on the two-dimensional spectrum information to obtain the audio features of the audio segments. The audio features are used as an input of the input layer 510, and then the encoder outputs, based on the convolutional layer/pooling layer 520 and the neural network layer 530, representation vectors corresponding to all audio segment. The Mel spectrogram is a frequency domain representation of a sound. The Mel spectrogram emphasizes low frequencies that are critical to speech intelligibility, but does not emphasize high frequencies that are dominated by frictional and other noise bursts and do not usually require high fidelity modeling.

For example, an audio feature corresponding to an audio segment obtained by the encoder is an eigenvector sequence X=[x1, x2, ..., xk], and the encoder encodes the eigenvector sequence X=[x1, x2, ..., xk], a representation vector is obtained. The representation vector is an eigenvector sequence H=[h1, h2, ..., hk], where xk represents a speech eigenvector of the $k^{th}$ frame, and hk is an eigenvector output by a last neural network layer of the encoder; and hk corresponds to a result obtained after xk is converted by the encoder module.

Step S33: The training device inputs the representation vectors into an interaction module, and performs, based on a parameter of the interaction module, information interaction on representation vectors corresponding to data segments of adjacent scales in the subset, to obtain fused representation vectors corresponding to the data segments of various scales.

In this embodiment of this application, for a representation vector A corresponding to each data segment a in the subset, the interaction module is configured to perform information interaction between the representation vector A and a representation vector B corresponding to another data segment b, and output a fused representation vector C. In other words, the interaction module converts the representation vector A into the fused representation vector C. The another data segment b and the data segment a belong to a data segment in a same subset, scales of the data segment b and the data segment a are different, and the scales of the data segment b and the data segment a are adjacent. That is, the data segment b is a part of the data segment a, or the data segment a is a part of the data segment b. For example, if the scale of the data segment a is the $i^{th}$ type, the scale of the data segment b is the $(i+1)^{th}$ type or the $(i-1)^{th}$ type. The information interaction is to fuse information related to the representation vector B into the representation vector A, to obtain the fused representation vector C. An information interaction manner may be a manner like linear transformation, summation, product, or dot product.

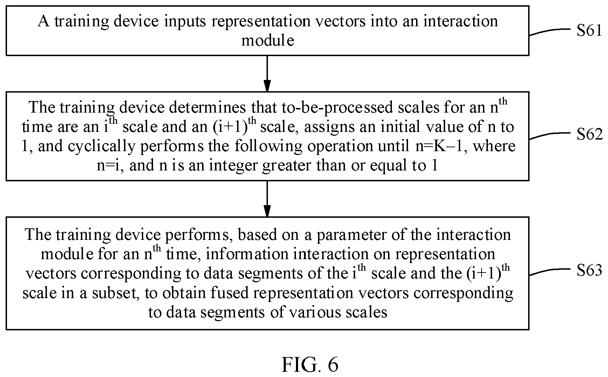

In this embodiment of this application, as shown in FIG. 6, step S33 may specifically include the following steps.

Step S61: The training device inputs the representation vectors into the interaction module.

In step S32, the encoder outputs corresponding representation vectors in all audio segments. In step S61, the training device inputs the representation vectors output by the encoder into the interaction module.

Step S62: The training device determines that to-be-processed scales for an $n^{th}$ time are the $i^{th}$ scale and the $(i+1)^{th}$ scale, assigns an initial value of n to 1, and cyclically performs the following operations until n=K-1, where n=i, and n is an integer greater than or equal to 1.

In this embodiment of this application, after inputting, into the interaction module, the representation vectors corresponding to the audio segments, the training device needs to determine two representation vectors for interacting information with each other, and determine an order of performing information interaction on the representation vectors.

In this embodiment of this application, the training device determines, based on scale adjacency, two representation vectors that perform information interaction with each other. That is, audio segments corresponding to the two representation vectors that perform information interaction are adjacent in scale. The training device determines, in ascending order of scales, the order of performing information interaction on the representation vectors. That is, the training device determines that scales on which information interaction is first performed (namely, first to-be-processed scales for a first time) are a smallest scale and a scale that is second smallest in the subset, scales on which information interaction is subsequently performed (namely, to-be-processed scales for a second time) are the scale that is the second smallest and a scale that is the third smallest in the subset, and so on.

Step S63: The training device performs, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

In this embodiment of this application, when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time. That is, a quantity of times of information interaction is performed is two or more, and the training device interacts, with a representation vector of the data segment of the $(i+1)^{th}$ scale, the fused representation vector obtained after information interaction is performed on the data segment of the $i^{th}$ scale for the $(n-1)^{th}$ time. Step S63 is specifically: The training device performs, based on the parameter of the interaction module, information interaction on the fused representation vector of the data segment of the $i^{th}$ scale output by the interaction module and the representation vector of the data segment of the $(i+1)^{th}$ scale output by the encoder, to obtain the fused representation vectors corresponding to the data segments of various scales. The fused representation vector of the data segment of the $i^{th}$ scale output by the interaction module is a representation vector obtained after information interaction is performed on the data segment of the $i^{th}$ scale for an $(n-1)^{th}$ time.

Specifically, as shown in the foregoing example, refer to FIG. 4. An example in which the training device performs step S62 and step S63 on the first subset of the song A is used, and that representation vectors of the song A, the audio segment B, the audio segment D, the audio segment d1, and the audio segment d2 output by the encoder are respectively A1, B1, D1, d11, and d21 is specifically described as follows:

The training device assigns the initial value of n to 1, and the training device determines that to-be-processed scales for an $n^{th}$ time are a first scale and a second scale. The training device performs, based on the parameter of the interaction module, information interaction on representation vectors corresponding to data segments of the first scale and the second scale in the first subset. That is, the training device performs, based on the parameter of the interaction module, information interaction on the representation vector d11 and the representation vector D1, and performs information interaction on the representation vector d21 and the representation vector D1, so that a fused representation vector d13 corresponding to the audio segment d1, a fused representation vector d14 corresponding to the audio segment d2, and a fused representation vector D11 corresponding to the audio segment D may be obtained. The fused representation vector d13 represents that the fused representation vector d13 is obtained by fusing the representation vector d11 and information of the representation vector D1. Correspondingly, the fused representation vector d14 represents that fused representation vector d14 is obtained by fusing the representation vector d21 and the information of the representation vector D1. The fused representation vector D11 represents that the fused representation vector D11 is obtained by fusing the representation vector D1 and information of the representation vector d11 and the representation vector d21.

The training device detects that n is not equal to K-1, and the training device assigns the initial value of n to 2, and determines that to-be-processed scales for an $n^{th}$ time are a second scale and a third scale. The training device performs, based on the parameter of the interaction module, information interaction on the fused representation vector D11 and the representation vector B1, so that a fused representation vector D12 corresponding to the audio segment D and a fused representation vector B11 corresponding to the audio segment B may be obtained. The fused representation vector D12 represents that the fused representation vector D12 is obtained by fusing the fused representation vector D11 and information of the representation vector B1. The fused representation vector B11 represents that the fused representation vector B11 is obtained by fusing the representation vector B1 and information of the fused representation vector D11.

The training device detects that n is not equal to K-1, and the training device assigns the initial value of n to 3, and determines that to-be-processed scales for an $n^{th}$ time are a third scale and a fourth scale. The training device performs, based on the parameter of the interaction module, information interaction on the fused representation vector B11 and the representation vector A1, so that a fused representation vector B12 corresponding to the audio segment B and a fused representation vector A11 corresponding to the song A may be obtained. The fused representation vector B12 represents that the fused representation vector B12 is obtained by fusing the fused representation vector B11 and information about the representation vector A1. The fused representation vector A11 represents that the fused representation vector A11 is obtained by fusing the representation vector A1 and information of the fused representation vector B11.

The training device detects that n is equal to K-1, and the training device stops a cyclic operation.

Similarly, the training device performs a corresponding operation on another subset of the song A, and details are not described herein again. It should be noted that, the training device performs information interaction on data in a same subset, and does not perform information interaction on data in different subsets. For example, a representation vector corresponding to the audio segment d1 of a first scale in the first subset does not perform information interaction with a representation vector corresponding to the audio segment E of a second scale in the second subset.

As shown in the foregoing example, the song A, as a data segment of a largest scale, may appear in each subset. After calculating a fused representation vector corresponding to each data segment of a third scale (data segments B and C) in all subsets, the training device uses the fused representation vector corresponding to (the data segments B and C) as the representation vector corresponding to the data segment of the $i^{th}$ scale, and uses a representation vector that is of the song A and that is output by the encoder as a representation vector corresponding to the data segment of the $(i+1)^{th}$ scale, and interaction is performed by using the foregoing information interaction manner, to obtain a fused representation vector of the song A, namely, an overall representation vector of the song A. The overall representation vector is a representation vector obtained after information interaction is performed on a data segment of a largest scale in the to-be-learned data, that is, a fused representation vector obtained after the foregoing information interaction is performed on the song A and a data segment of a smaller scale than that of the song A.

In this embodiment of this application, the interaction module may be implemented as a neural network, and the interaction module may implement information interaction by using an attention mechanism, so that an encoder part of the neural network may perform, by using the attention mechanism, information interaction on representation vectors corresponding to data segments of adjacent scales. This implements information fusion between data segments of different scales. In some embodiments, the interaction module may be implemented as a fully connected neural network and a neural network of a transformer (Transformer) structure.

The attention mechanism (attention mechanism) simulates an internal process of biological observation behavior, namely, a mechanism that aligns internal experience with external feelings to increase observation fineness of some areas, and can quickly select high-value information from a large amount of information by using limited attention resources. The attention mechanism can quickly extract an important feature of sparse data, and therefore is widely used in natural language processing tasks, especially machine translation. An essential idea of the attention mechanism may be rewritten as the following formula:

$Lx=\|Source\|$ represents a length of Source, and Source represents input to-be-learned data. A formula meaning is that a plurality of elements included in Source are considered as a series of data pairs. In this case, a query (Query) of a specific element in a target Target is given, weight coefficients of values (Value) corresponding to keys of all elements in Source are obtained by calculating similarities or correlations between Query of the specific element and the keys (Key) of all elements in Source, and then weighted summation is performed on the values of all elements in Source, that is, a final attention score (Attention value) of the foregoing element is obtained. Therefore, the attention mechanism is to perform weighted summation on the values of all elements in Source, and Query and Key are used to calculate a weight coefficient of corresponding Value. Conceptually, the attention mechanism can be understood as selecting a small amount of important information from a large amount of information and focusing on the important information, and ignoring most unimportant information. A process of the focusing is reflected in calculation of the weight coefficient. A greater weight indicates that Value corresponding to the weight is more focused, that is, the weight indicates importance of information, and Value is the information corresponding to the weight.

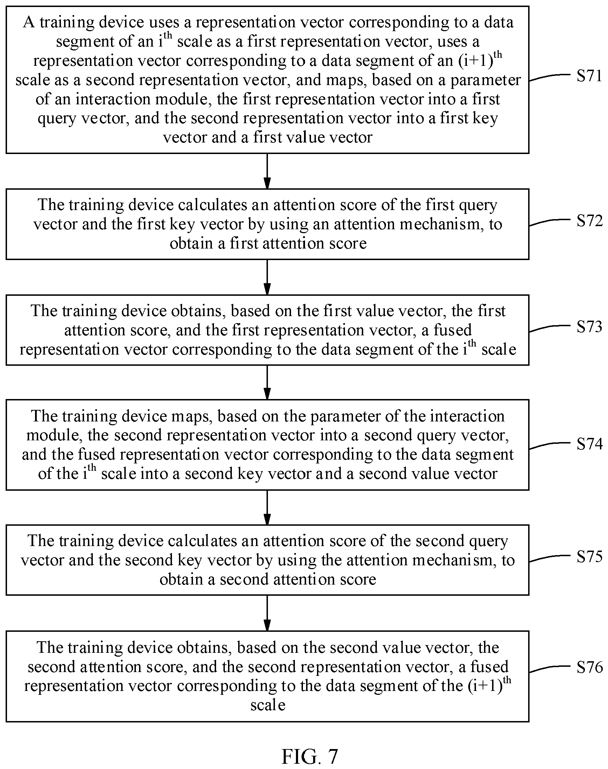

The following describes an example in which the interaction module performs information interaction by using the attention mechanism. As shown in FIG. 7, based on the parameter of the interaction module, step S63 may specifically include the following steps.

Step S71: The training device uses the representation vector corresponding to the data segment of the $i^{th}$ scale as a first representation vector, uses a representation vector corresponding to the data segment of the $(i+1)^{th}$ scale as a second representation vector, and maps, based on the parameter of the interaction module, the first representation vector into a first query vector, and the second representation vector into a first key vector and a first value vector.

In this embodiment of this application, the training device performs an attention function operation on an input representation vector by using the interaction module, and outputs a corresponding query (query) vector, a corresponding key (key) vector, and a corresponding value (value) vector. The attention function may be specifically implemented as linear transformation. The linear transformation may map a vector belonging to vector space to other vector space, and the vector space is a set including a plurality of vectors of a same dimension.

During specific implementation, the interaction module includes three different learnable parameter matrices WQ, WK, and WV. The training device performs, by using the three learnable parameter matrices, linear transformation on a representation vector input into the interaction module, to obtain a corresponding query vector, a key vector, and a value vector. The learnable parameter matrices WQ, WK, and WV are parameters of the interaction module.

Step S72: The training device calculates an attention score of the first query vector and the first key vector by using an attention mechanism, to obtain a first attention score.

In this embodiment of this application, the training device uses, as an input, representation vectors corresponding to audio segments of adjacent scales (for example, an $i^{th}$ type and an $(i+1)^{th}$ type) in a same subset, and obtains learnable parameter matrices WQ, WK, and WV corresponding to an audio segment of the $i^{th}$ scale. The training device maps, by using the learnable parameter matrix WQ, a representation vector (namely, a first representation vector) corresponding to the audio segment of the $i^{th}$ scale into the first query vector, maps, by using the learnable parameter matrix WK, a representation vector (namely, a second representation vector) corresponding to an audio segment of an $(i+1)^{th}$ scale into the first key vector, and maps, by using the learnable parameter matrix WV, the representation vector (namely, the second representation vector) corresponding to the audio segment of the $(i+1)^{th}$ scale into the first value vector. The training device performs attention score calculation on the first query vector and the first key vector, to obtain a first attention score between the first representation vector and the second representation vector.

A formula for calculating the first attention score is as follows:

$$a_{sl} = \frac{exp\left(q_m(h_s)^T k_m(h_l)\right)}{\sum_k exp\left(q_m(h_s)^T k_m(h_l)\right)},$$

where $q_m(\cdot)$ and $k_m(\cdot)$ represent linear transformations with deviation terms, $q_m(\cdot)$ is used to map an input into the first query vector, and $k_m(\cdot)$ is used to map an input into the first key vector. $h_s$ is the first representation vector. $h_l$ is the second representation vector. T in $(h_s)^T$ represents a transposition of a matrix, and $a_{sl}$ is the first attention score. $exp$ () represents an exponential function with e as a base.

Step S73: The training device obtains, based on the first value vector, the first attention score, and the first representation vector, a fused representation vector corresponding to the data segment of the $i^{th}$ scale.

In this embodiment of this application, the training device performs content query in the value vector of the data segment of the $(i+1)^{th}$ scale based on the obtained first attention score, and sums up, at a specific weight, content found from the value vector of the data segment of the $(i+1)^{th}$ scale and the first representation vector of the data segment of the $i^{th}$ scale, to obtain the fused representation vector corresponding to the data segment of the $i^{th}$ scale.

A fusion formula of the fused representation vector corresponding to the data segment of the $i^{th}$ scale is as follows:

$$h_s^f = h_s + \lambda_s a_{sl} v_m(h_l),$$

where $v_m(\cdot)$ represents a linear transformation with a deviation term, and is used to map an input into the first value vector.
$h_s^f$ is the fused representation vector corresponding to the data segment of the $i^{th}$ scale. $h_s$ is the first representation vector. $h_l$ is the second representation vector. $\lambda_s$ is a weight hyperparameter, and is used to measure an importance degree between the first representation vector and the content found through interactive query (namely, $v_m(h_l)$ in the foregoing fusion formula).

$q_m(\cdot)$, $k_m(\cdot)$, and $v_m(\cdot)$ correspond to the parameter matrices WQ, WK, and WV of the interaction module, that is, $q_m(\cdot)$, $k_m(\cdot)$, and $v_m(\cdot)$ are parameters that need to be learned by the interaction module.

Step S74: The training device maps, based on the parameter of the interaction module, the second representation vector into a second query vector, and the fused representation vector corresponding to the data segment of the $i^{th}$ scale into a second key vector and a second value vector.

In this embodiment of this application, the interaction module includes three learnable parameter matrices Wq, Wk, and Wv corresponding to data of the $(i+1)^{th}$ scale. The training device performs, by using the three learnable parameter matrices, linear transformation on the representation vector input into the interaction module, to obtain a corresponding second query vector, a second key vector, and a corresponding second value vector. The learnable parameter matrices Wq, Wk, and Wv are parameters of the interaction module.

The learnable parameter matrices WQ, WK, and WV may be different from the learnable parameter matrices Wq, Wk, and Wv. That is, for data segments of different scales or different data segments, corresponding learnable parameter matrices are different.

Step S75: The training device calculates an attention score of the second query vector and the second key vector by using the attention mechanism, to obtain a second attention score.

In this embodiment of this application, the training device uses, as an input, the fused representation vector corresponding to the data segment of the $i^{th}$ scale the second representation vector and that are obtained in step S74, and obtains the learnable parameter matrices Wq, Wk, and Wv corresponding to the audio segment of the $(i+1)^{th}$ scale. The training device maps, by using the learnable parameter matrix Wq, the representation vector (namely, the second representation vector) corresponding to the audio segment of the $(i+1)^{th}$ scale into the second query vector, maps, by using the learnable parameter matrix Wk, the fused representation vector corresponding to the data segment of the $i^{th}$ scale into the second key vector, maps, by using the learnable parameter matrix Wv, the fused representation vector corresponding to the data segment of the $i^{th}$ scale into the second value vector, and performs attention score calculation on the second query vector and the second key vector, to obtain the second attention score between the second representation vector and the fused representation vector corresponding to the data segment of the $i^{th}$ scale.

A formula for calculating the second attention score is as follows:

$$a_{ls} = \frac{exp\left(q'_m(h_l)^T k'_m\left(h_s^f\right)\right)}{\sum_k exp\left(q'_m(h_l)^T k'_m\left(h_s^f\right)\right)},$$

where $q'_m(\cdot)$ and $k'_m(\cdot)$ represent linear transformations with deviation terms, $q'_m(\cdot)$ is used to map an input into the second query vector, and $k'_m(\cdot)$ is used to map an input into the second key vector. $h_s$ is the first representation vector. $h_l$ is the second representation vector. T in $(h_l)^T$ represents a transposition of a matrix. $h_s^f$ is the fused representation vector corresponding to the data segment of the $i^{th}$ scale. $a_{ls}$ is the second attention score. $exp$ () represents an exponential function with e as a base.

Step S76: The training device obtains, based on the second value vector, the second attention score, and the second representation vector, a fused representation vector corresponding to the data segment of the $(i+1)^{th}$ scale.

In this embodiment of this application, the training device performs content query in the value vector of the data segment of the $i^{th}$ scale based on the obtained second attention score, and sums up, at a specific weight, content found from the value vector of the data segment of the $i^{th}$ scale and the second representation vector of the data segment of the $(i+1)^{th}$ scale, to obtain the fused representation vector corresponding to the data segment of the $(i+1)^{th}$ scale.

A fusion formula of the fused representation vector corresponding to the data segment of the $(i+1)^{th}$ scale:

$$h_l^f = h_l + \lambda_l a_{ls} v'_m(h_s^f),$$

where $v'_m(\cdot)$ represents a linear transformation with a deviation term, and is used to map an input into the second value vector. $h_s^f$ is the fused representation vector corresponding to the data segment of the $(i+1)^{th}$ scale. $h_l$ is the second representation vector. $\lambda_l$ is a weight hyperparameter, and is used to measure an importance degree between the second representation vector and the content found through interactive query (namely, $v'_m(h_s^f)$ in the foregoing fusion formula). $a_{ls}$ is the second attention score. $q'_m(\cdot)$, $k'_m(\cdot)$, and $v'_m(\cdot)$ correspond to the parameter matrices Wq, Wk, and Wv of the interaction module, that is, $q'_m(\cdot)$, $k'_m(\cdot)$, and $v'_m(\cdot)$ are parameters that need to be learned by the interaction module.

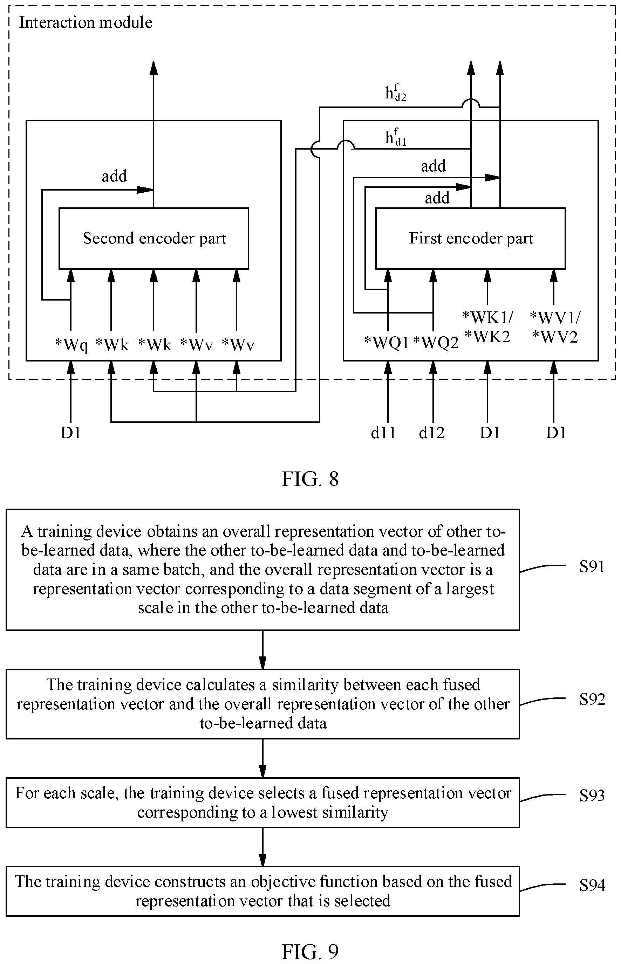

FIG. 8 is a diagram of a structure of an interaction module according to an embodiment of this application.

As shown in FIG. 8, the interaction module includes at least two encoder parts. As shown in the foregoing example, information interaction is performed between the representation vector D1 corresponding to the data segment of the second scale and each of the representation vectors d11 and d21 corresponding to the data segment of the first scale in the first subset of the song A.

A training device inputs the representation vectors d11 and d21 corresponding to the data segment of the first scale and the representation vector D1 corresponding to the data segment of the second scale in the first subset into a first encoder part, and information interaction is performed between the representation vector D1 and each of the representation vectors d11 and d21, to obtain respective fused representation vectors.

The training device obtains learnable parameter matrices WQ1, WK1, and WV1 (namely, parameters of an interaction module) corresponding to a data segment d1, maps the representation vector d11 into a first query vector Qd11 (namely, d11*WQ1) by using the matrix WQ1, maps the representation vector D1 into a first key vector KD1 (namely, D1*WK1) by using the matrix WK1, and maps the representation vector D1 into a first value vector VD1 (namely, D1*WV1) by using the matrix WV1.

The training device calculates a first attention score $a_{dD1}$ between the first query vector Qd11 and the first key vector KD1 according to the formula for calculating the first attention score. Then, the training device obtains, through calculation according to the fusion formula of the fused representation vector corresponding to the data segment of the $i^{th}$ scale and based on the representation vector d11, the first attention score, and the first value vector, a fused representation vector $h_{d1}^f$ corresponding to the representation vector d11.

Similarly, the training device processes the representation vectors d21 and D1 based on learnable parameter matrices WQ2, WK2, and WV2 (namely, parameters of the interaction module) corresponding to a data segment d2, to obtain a fused representation vector $h_{\mathrm{d2}}^{f}$ corresponding to the representation vector d21. The learnable parameter matrices WQ1, WK1, and WV1 corresponding to d1 may be different from the learnable parameter matrices WQ2, WK2, and WV2 corresponding to d2. This is specifically determined based on an actual situation.

The training device inputs the fused representation vector $h_{\mathrm{d1}}^{f}$ corresponding to the representation vector d11, the fused representation vector $h_{\mathrm{d2}}^{f}$ corresponding to the representation vector d21, and the representation vector D1 into a second encoder part, obtains the learnable parameter matrices Wq, Wk, and Wv related to the representation vector D1, maps the representation vector D1 into a second query vector qD1 (namely, D1*Wq) by using the learnable parameter matrix Wq, maps the fused representation vector $h_{\mathrm{d1}}^{f}$ into the second key vector kd1 (namely, $h_{\mathrm{d1}}^{f}*\mathrm{Wk}$) by using the learnable parameter matrix Wk, maps the fused representation vector $h_{\mathrm{d1}}^{f}$ into a second value vector vd1 (namely, $h_{\mathrm{d1}}^{f}*\mathrm{Wv}$) by using the learnable parameter matrix Wv, maps the fused representation vector $h_{\mathrm{d2}}^{f}$ into a second key vector kd2 (namely, $h_{\mathrm{d2}}^{f}*\mathrm{Wk}$) by using the learnable parameter matrix Wk, and maps the fused representation vector $h_{\mathrm{d2}}^{f}$ into a second value vector vd2 (namely, $h_{\mathrm{d2}}^{f}*\mathrm{Wv}$) by using the learnable parameter matrix Wv.

The training device calculates a second attention score $a_{Dd1}$ between the second query vector qD1 and the second key vector kd1, and calculates a second attention score $a_{Dd2}$ between the second query vector qD1 and the second key vector kd2 according to the formula for calculating the first attention score. Then, that the training device obtains, through calculation according to the fusion formula of the fused representation vector corresponding to the data segment of the $(i+1)^{\mathrm{th}}$ scale and based on the representation vector d11, the second attention score $a_{Dd1}$, the second attention score $a_{Dd2}$, the second value vector vd1, and the second value vector vd2, a fused representation vector $h_{\mathrm{D1}}^{f}$ corresponding to the representation vector D1 is specifically as follows:

$$h_{\mathrm{D1}}^{f} = \mathrm{D1} + \lambda_{Dd1}a_{\mathrm{Dd1}}v'_{m}\big(h_{\mathrm{d1}}^{f}\big) + \lambda_{Dd2}a_{\mathrm{Dd2}}v'_{m}\big(h_{\mathrm{d2}}^{f}\big),$$

where $v'_{m}(\cdot)$ represents a linear transformation with a deviation term, and is used to map an input into the second value vector. $h_{\mathrm{d1}}^{f}$ is the fused representation vector corresponding to the representation vector d11. $h_{\mathrm{d2}}^{f}$ is the fused representation vector corresponding to the representation vector d21. $v'_{m}\big(h_{\mathrm{d1}}^{f}\big)$ is the second value vector vd1, and $v'_{m}\big(h_{\mathrm{d2}}^{f}\big)$ is the second value vector vd2. $h_{\mathrm{D1}}^{f}$ is the fused representation vector corresponding to the data segment of the $(i+1)^{\mathrm{th}}$ scale. $a_{\mathrm{Dd1}}$ is the second attention score between the second query vector qD1 and the second key vector kd1. $a_{\mathrm{Dd}}$ is the second attention score between the second query vector qD1 and the second key vector kd2. D1 is a second representation vector corresponding to a data segment of a second scale. $\lambda_{Dd1}$ is a weight hyperparameter, and is used to measure an importance degree between the second representation vector and content found through interactive query (namely, $v'_{m}\big(h_{\mathrm{d1}}^{f}\big)$ in the foregoing fusion formula). $\lambda_{Dd2}$ is a weight hyperparameter, and is used to measure an importance degree between the second representation vector and content found through interactive query (namely, $v'_{m}\big(h_{\mathrm{d2}}^{f}\big)$ in the foregoing fusion formula).

In this embodiment of this application, for an audio segment d1 of a first scale, information about an audio segment D of a second scale is fused in a fused representation vector $h_{\mathrm{d1}}^{f}$ of the audio segment d1 of the first scale. For an audio segment d2 of a first scale, the information about the audio segment D of the second scale is fused in a fused

representation vector $h_{d2}^{f}$ of the audio segment d2 of the first scale. For the audio segment D of the second scale, information about all audio segments (for example, the audio segments d1 and d2) of a first scale in a corresponding subset of the audio segment D of the second scale is fused in a fused representation vector $h_{D1}^{f}$ of the audio segment D of the second scale.

Similarly, information about all audio segments (for example, audio segments e1 and e2) of a first scale in a corresponding subset of an audio segment E of a second scale is fused in a fused representation vector corresponding to the audio segment E of the second scale. Information about all audio segments (for example, audio segments f1 and f2) of a first scale in a corresponding subset of an audio segment F of a second scale is also fused in a fused representation vector corresponding to the audio segment F of the second scale. Information about all audio segments (for example, audio segments g1 and g2) of a first scale in a corresponding subset of an audio segment G of a second scale is also fused in a fused representation vector corresponding to the audio segment G of the second scale.

Then, the training device uses the fused representation vectors corresponding to the audio segments D and E of the second scales as an input, and continues to perform information interaction with an audio segment B of a third scale. For the audio segment D of the second scale, information about the audio segment B of the third scale is further fused in the fused representation vector corresponding to the audio segment D of the second scale. For the audio segment E of the second scale, the information about the audio segment B of the third scale is further fused in the fused representation vector corresponding to the audio segment E of the second scale. For the audio segment B of the third scale, information about all audio segments (for example, the audio segments D and E) of a second scale in a corresponding subset of the audio segment B of the third scale is fused in a fused representation vector of the audio segment B of the third scale.

Then, the training device uses the fused representation vectors corresponding to the audio segments F and G of the second scales as an input, and continues to perform information interaction with an audio segment C of a third scale. Information about all audio segments (for example, the audio segments F and G) of a second scale in a corresponding subset of the audio segment C of the third scale is also fused in a fused representation vector corresponding to the audio segment C of the third scale.

Then, the training device uses the fused representation vectors corresponding to the audio segments B and C of the third scales as an input, and continues to perform information interaction with an audio segment of a fourth scale (namely, an entire song A). For the audio segment B of the third scale, information of the entire song A is further fused in the fused representation vector corresponding to the audio segment B of the third scale. For the audio segment C of the third scale, information of the entire song A is further fused in the fused representation vector corresponding to the audio segment C of the third scale. For the entire song A, information about all audio segments (for example, the audio segments B and C) of a third scale in a corresponding subset of the song A is fused in a fused representation vector of the song A. The information about all audio segments (for example, the audio segments B and C) of the third scale is further fused with information about an audio segment of a smaller scale, that is, finally, information that is of the song A and fused with all audio segments in the corresponding subset of the song A may be obtained.

Step S34: The training device constructs an objective function based on the fused representation vectors.

The learning representation model provided in this embodiment of this application may use a neural network. Because it is expected that an output of the neural network is close to a value that really wants to be predicted as much as possible, a predicted value of a current network may be compared with a target value that really wants to be predicted, then, a weight vector of each layer of the neural network is updated based on a difference between the predicted value and the target value (certainly, before first update, there is usually an initialization process, that is, a parameter is preconfigured for each layer in the neural network). For example, if a predicted value of a network is high, the weight vector is adjusted to make the predicted value of the network lower, and is continuously adjusted until the neural network can predict a desired target value. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the neural network is a process of minimizing the loss as much as possible.

In this embodiment of this application, the objective function is constructed based on the fused representation vectors. As shown in FIG. 9, step S34 may be specifically the following steps.

Step S91: The training device obtains an overall representation vector of other to-be-learned data, where the other to-be-learned data and the to-be-learned data are in a same batch, and the overall representation vector is a representation vector corresponding to a data segment of a largest scale in the other to-be-learned data.

It should be noted that, in a training process, iteration (Iteration) is to train some to-be-learned data in a training set once, that is, forward propagation and back propagation are performed once on the some to-be-learned data in the training set in a to-be-trained representation learning model. Batch (Batch) is a part of data sent to the to-be-trained representation learning model. A batch size (Batch size) is a hyperparameter used to define an amount of to-be-learned data to be trained before a parameter of the to-be-trained representation learning model is updated.

In this embodiment of this application, there may be a plurality of pieces of to-be-learned data that are in a same batch and that are input into the to-be-trained representation learning model for training. For example, in the foregoing example, the to-be-learned data in the same batch may further include a song B, a song C, and the like. The training device inputs to-be-trained data (for example, songs A, B, and C) in a same batch into the encoder and interaction module. After step S33, the training device may obtain overall representation vectors of the songs A, B, and C. The overall representation vector represents a representation vector corresponding to a data segment of a largest scale in the song, and the overall representation vector is integrated with information about all audio segments in subsets corresponding to the song.

Step S92: The training device calculates a similarity between each fused representation vector and the overall representation vector of the other to-be-learned data.

In this embodiment of this application, in step S33, the training device may obtain fused representation vectors corresponding to all audio segments in a dataset of each to-be-learned data in the training set. For each fused representation vector, a similarity between the fused representation vector and the overall representation vector of the other to-be-learned data in a same batch is calculated. For example, for a fused representation vector corresponding to each audio segment in a dataset of the song A, a cosine similarity between the fused representation vector and the overall representation vector of the song B is calculated, and a cosine similarity between the fused representation vector and the overall representation vector of the song C is calculated.

A formula for calculating the cosine similarity is as follows:

$$similarity = \frac{h_{so}^f \cdot h_{se}^f}{\left\| h_{so}^f \right\| \times \left\| h_{se}^f \right\|},$$

where $h_{so}^f$ and $h_{se}^f$ respectively represent representation vectors corresponding to two different pieces of to-be-learned data that are in a same batch and that are output by the interaction module, $h_{se}^f$ is a fused representation vector corresponding to a data segment in one piece of to-be-learned data, $h_{so}^f$ is an overall representation vector of the other piece of to-be-learned data, ‖.‖ is the modulus of a vector, and *similarity* is the cosine similarity.

In this embodiment of this application, when a same batch of data includes M pieces of to-be-learned data, for a data segment of a specific scale of a specific piece of to-be-learned data, the training device separately calculates cosine similarities between a fused representation vector of the data segment and overall representation vectors of other M-1 pieces of to-be-learned data, and then performs processing based on all obtained cosine similarities, for example, averaging all the cosine similarities, and an obtained average is used as a similarity between the fused representation vector of the data segment and the overall representation vector of the other to-be-learned data. In some other embodiments, one piece of the other to-be-learned data in a same batch of data may be randomly selected. The training device calculates a cosine similarity between a fused representation vector of a data segment and an overall representation vector of the selected to-be-learned data, and uses the obtained cosine similarity as a similarity between the fused representation vector of the data segment and the overall representation vector of the other to-be-learned data.

In this embodiment of this application, for each piece of to-be-learned data in the training set, the training device may obtain, in step S92, similarities between fused representation vectors of data segments of all scales in the dataset of the to-be-learned data and the overall representation vector of the other to-be-learned data.

Step S93: For each scale, the training device selects a fused representation vector corresponding to a lowest similarity.

In this embodiment of this application, for each piece of to-be-learned data, if the to-be-learned data includes M scales, the training device selects, for each scale based on a lowest similarity value, fused representation vectors corresponding to M lowest similarities.

As shown in the foregoing example, for the song A, in step S92, the training device separately calculates similarities between the fused representation vectors of the song A, the audio segments B, C, D, E, F, G, d1, d2, e1, e2, g1, and g2 and the overall representation vector of the other to-be-learned data in a same batch. For the first scale, the training device determines, from similarities between the fused representation vectors of the audio segments d1, d2, e1, e2, g1, and g2 and the overall representation vector of the other to-be-learned data in a same batch, a lowest similarity, and selects a fused representation vector corresponding to the lowest similarity. For example, in the first scale, the fused representation vector d13 corresponding to the audio segment d1 has a lowest similarity to the overall representation vector of the other to-be-learned data, and the fused representation vector d13 is selected. By analogy, for the second scale, the training device selects the fused representation vector D11. For the third scale, the training device selects the fused representation vector B11. In the dataset based on the song A, only the song A is used as a complete song and has a fourth scale. For the fourth scale, the training device directly obtains an overall representation vector of the song A output from the interaction module.

In this embodiment of this application, data segments of different scales that have a lowest similarity to the other to-be-learned data are selected, to obtain data segments that are more differentiated between different to-be-learned data, so as to avoid redundancy during subsequent comparison learning, which accelerates convergence of the objective function.

Step S94: The training device constructs the objective function based on the fused representation vector that is selected.

It should be noted that, as an important branch of the AI field, machine learning is widely applied in many fields. From a perspective of a learning method, the machine learning may be classified into supervised learning, self-supervised learning (self-supervised learning), semi-supervised learning, and reinforcement learning. The supervised learning means learning an algorithm or establishing a pattern based on training data, and inferring a new instance based on the algorithm or pattern. A model of the machine learning (namely, a learning representation model) is also referred to as a machine learning model. An expected output of the machine learning model is referred to as a label, and may be a predicted classification result (referred to as a classification label). A difference between the self-supervised learning and supervised learning lies in that a training sample of the self-supervised learning does not have a given label, and the machine learning model obtains a specific result by analyzing the training sample. The self-supervised learning can be considered as an ideal state of the machine learning. A model directly learns from unlabeled data without labeling data. A core of the self-supervised learning is how to automatically generate labels for data.

The representation learning model provided in this embodiment of this application may be trained in a self-supervised learning manner. A self-supervised learning mode can be classified into three types: context-based (context-based), temporal-based (temporal-based), and contrastive-based (contrastive-based). In this embodiment of this application, an example of a representation learning model of comparison learning training is used. A comparison learning method learns potential feature representation of a model by constructing a positive sample and a negative sample and comparing the positive and negative samples in feature space. This method aims to learn a potential representation vector by maximizing mutual information between the positive sample and negative sample through comparison learning.

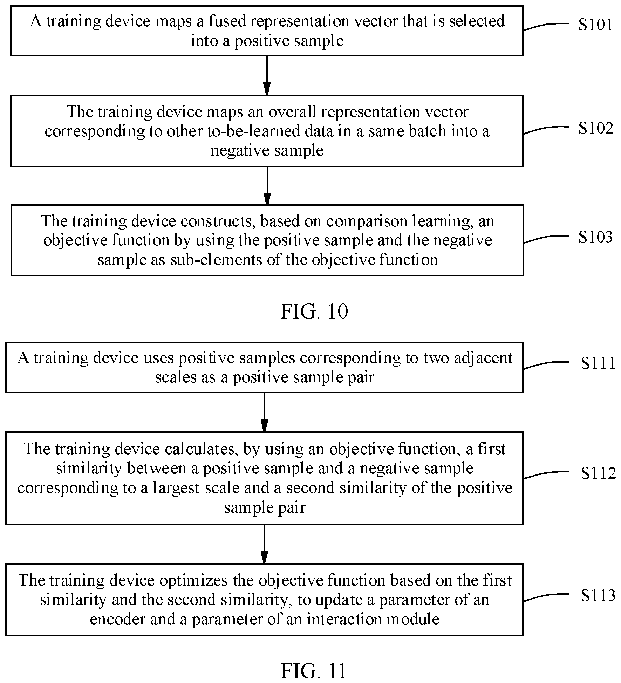

As shown in FIG. 10, step S94 may specifically include the following steps.

Step S101: The training device maps the fused representation vector that is selected into a positive sample.

Step S102: The training device maps the overall representation vector corresponding to the other to-be-learned data in the same batch into a negative sample.

Step S103: The training device constructs, based on comparison learning, the objective function by using the positive sample and the negative sample as sub-elements of the objective function.

Step S35: The training device optimizes the objective function, to adjust the parameter of the encoder and the parameter of the interaction module, so that the encoder and the interaction module learn a representation vector of the to-be-learned data.

In this embodiment of this application, a multi-layer comparison learning is used, that is, that a representation vector of a data segment of an adjacent scale is shortened and gradually transitions to a representation vector of a data segment of a largest scale (namely, an entire song), to optimize the objective function is as follows:

$$L_i^{Hc} = -log \frac{\sum_{j=1}^{N-1} \lambda_j exp\left(sim(z_{s_j}, z_{s_{j+1}})/\tau\right)}{\sum_{j=1}^{N-1} \lambda_j exp\left(sim(z_{s_j}, z_{s_{j+1}})/\tau\right) + \sum_{k=1}^{B} ||_{[k \neq i]} exp\left(sim(z_i, z_k)/\tau\right)},$$

where N is a quantity of scale types. i represents the $i^{th}$ song in a same batch. $L_i^{Hc}$ is a predicted value output by the objective function after a plurality of layers of comparison learning, namely, a loss value. $\tau$ is a temperature hyperparameter used to control uniformity of generated representation. $\lambda_j$ is a hyperparameter, j is less than or equal to N-1, and j represents a weight value of a $j^{th}$ adjacent scale pair in the to-be-learned data. $exp$ () represents an exponential function with e as a base. sim() is a function for calculating a similarity. B represents a batch size, and $||_{[k \neq i]}$ is a function. When k=i, a value is 0. Otherwise, the value is 1. $z_i$ and $z_k$ respectively represent representation of entire songs of the $i^{th}$ song and the $k^{th}$ song in comparison learning space, that is, respectively represent overall representation vectors of the $i^{th}$ song and the $k^{th}$ song; and $z_{s_j}$ represents a representation vector of an audio segment of a $j^{th}$ scale in the comparison learning space, and $z_{s_{j+1}}$ represents a representation vector of an audio segment of a $(j+1)^{th}$ scale in the comparison learning space.

In this embodiment of this application, after selecting a corresponding fused representation vector in step S93, the training device outputs the selected representation vector to a multi-layer perceptron (Multi-Layer Perceptron, MLP), and a fused representation vector is obtained in comparison learning through mapping by the multi-layer perceptron mapper, for multi-layer comparison in the comparison learning space. That is, the multi-layer perceptron converts $h_1^f$ into $z_{s_{j+1}}$ in the foregoing fusion formula, converts $h_s^f$ into $z_{s_j}$, and maps an overall representation vector of a song into $z_i$ and $z_k$.

In this embodiment of this application, the representation vector input into the interaction module may be changed by adjusting a weight parameter and a bias parameter in the encoder, and the representation vectors $h_1^f$ and $h_s^f$ output by the interaction module may be changed by adjusting parameter matrices such as WQ, WK, and WV in the interaction module. Correspondingly, the representation vectors $z_{s_j}$ and $z_{s_{j+1}}$ in the comparison learning space are changed, so that a predicted value $L_i^{Hc}$ is close to a desired target value.

As shown in FIG. 11, step S35 may specifically include the following steps.

Step S111: The training device uses positive samples corresponding to two adjacent scales as a positive sample pair.

Step S112: Calculate, by using the objective function, a first similarity between a positive sample and a negative sample corresponding to a largest scale and a second similarity of the positive sample pair.

Step S113: The training device optimizes the objective function based on the first similarity and the second similarity, to update the parameter of the encoder and the parameter of the interaction module.

In this embodiment of this application, amounts of information between complete to-be-learned data and a data segment obtained through segmentation differ greatly. For example, amounts of information between the song A and the audio segment d1 differ greatly, and forcibly shortening a distance between the song A and the audio segment d1 destroys a global feature. In this embodiment of this application, multi-layer comparison learning is used, and the training device shortens representation vectors of audio segments of adjacent lengths. In some embodiments, a representation vector of a small scale may be first shortened, and gradually transitions to a representation vector of a large scale.

In this embodiment of this application, for a specific piece of to-be-learned data, the training device calculates a first similarity between a positive sample and a negative sample that correspond to a largest scale of the to-be-learned data. As shown in the foregoing example, the training device calculates a first similarity between an overall representation vector of a song A and a representation vector of another song B in a same batch, calculates a first similarity between the overall representation vector of the song A and a representation vector of another song C in the same batch, and calculates a second similarity between positive samples corresponding to two adjacent scales of the song A.

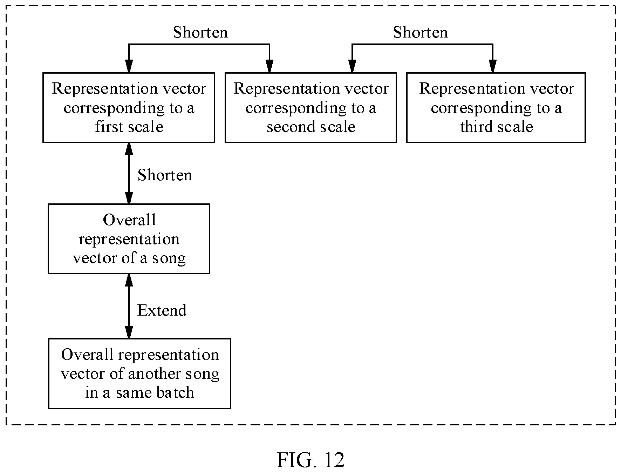

As shown in the foregoing example and FIG. 12, for the song A, the training device selects, in step S34, the representation vector d13 corresponding to the first scale, the representation vector D11 corresponding to the second scale, the representation vector B11 corresponding to the third scale, and an overall representation vector A2 corresponding to a fourth scale. The training device shortens a distance between the representation vector d13 corresponding to the first scale and the representation vector D11 corresponding to the second scale, a distance between the representation vector D11 corresponding to the second scale and the representation vector B11 corresponding to the third scale, and finally a distance between the representation vector B11 corresponding to the three scales and the representation vector A11 corresponding to the fourth scale, and extends a distance between the overall representation vector A2 corresponding to the fourth scale and an overall representation vector of the other to-be-learned data in the same batch. Finally, all obtained losses are added together to optimize the representation learning model. It may be understood that, shortening a distance is to increase a similarity between two representation vectors, and extending a distance is to reduce a similarity between two representation vectors.

In this embodiment of this application, data segments of different scales in same to-be-learned data are used as positive samples, and correlation between the positive samples is ensured, so that good feature expression can be learned. Other to-be-learned data in a same batch is used as a negative sample, and there is no need to construct another negative sample. This reduces workloads. In addition, a similarity between the selected positive sample and negative sample is very low, so that better clustering-like effect can be achieved during comparison learning of the positive and negative samples.

The training device performs training in the foregoing training phase to obtain a representation learning model, where the representation learning model includes at least a trained encoder and a trained interaction module. The following describes a model application process, namely, a process in which an execution device performs inference.

II. Inference phase

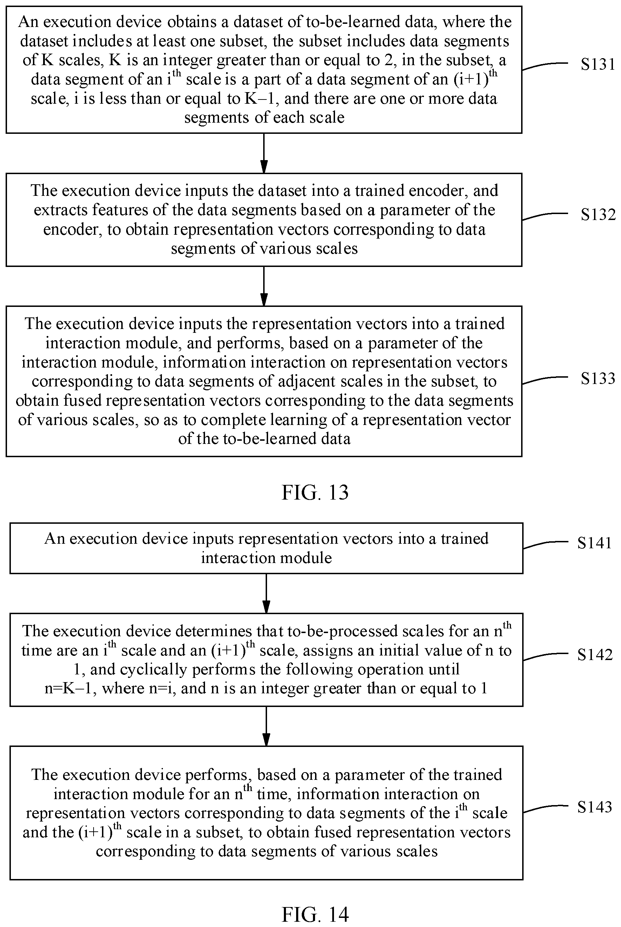

In an embodiment of this application, FIG. 13 is another schematic flowchart of a learning representation method according to an embodiment of this application. The representation learning method provided in this embodiment of this application may include the following steps.

Step S131: An execution device obtains a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale.

In this embodiment of this application, if the dataset of the to-be-learned data includes the data segments of K scales, the execution device may directly use the dataset. If the dataset of the to-be-learned data does not include the data segments of K scales, the execution device may obtain the to-be-learned data and a preset quantity of scale types, and then segment the to-be-learned data to obtain data segments. During segmentation, the execution device segments a data segment of a current smallest scale until a quantity of scale types in the subset reaches the preset quantity of scale types. For details, refer to FIG. 4. Details are not described herein again.

Step S132: The execution device inputs the dataset into a trained encoder, and extracts features of the data segments based on a parameter of the encoder, to obtain representation vectors corresponding to data segments of various scales.

In this embodiment of this application, the trained encoder includes content of the encoder in the training phase. Details are not described herein again.

Step S133: The execution device inputs the representation vectors into a trained interaction module, and performs, based on a parameter of the interaction module, information interaction on representation vectors corresponding to data segments of adjacent scales in the subset, to obtain fused representation vectors corresponding to the data segments of various scales, so as to complete learning of a representation vector of the to-be-learned data.

As shown in FIG. 14, step S133 may specifically include the following steps.

Step S141: The execution device inputs the representation vectors into the trained interaction module.

Step S142: The execution device determines that to-be-processed scales for an $n^{th}$ time are the $i^{th}$ scale and the $(i+1)^{th}$ scale, assigns an initial value of n to 1, and cyclically performs the following operations until n=K-1, where n=i, and n is an integer greater than or equal to 1.

Step S143: The execution device performs, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

In this embodiment of this application, when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

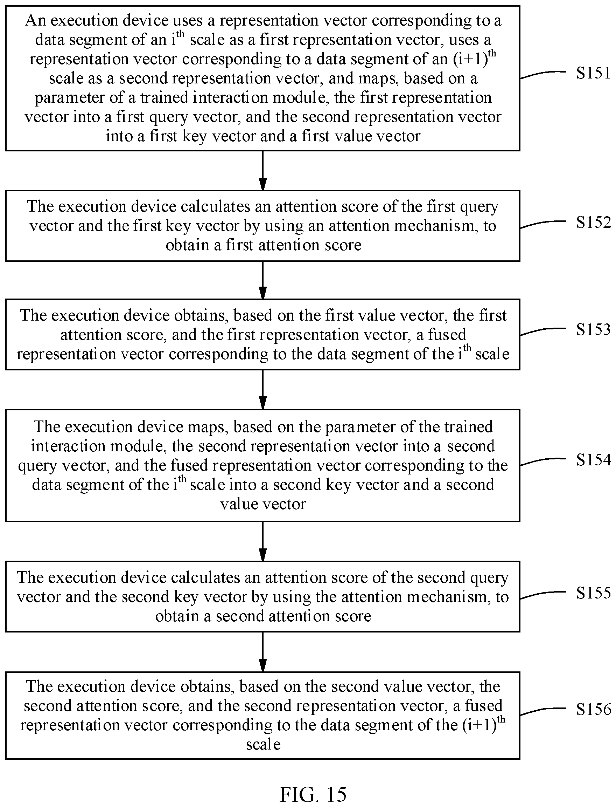

As shown in FIG. 15, step S143 may specifically include the following steps.

Step S151: The execution device uses the representation vector corresponding to the data segment of the $i^{th}$ scale as a first representation vector, uses the representation vector corresponding to the data segment of the $(i+1)^{th}$ scale as a second representation vector, and maps, based on the parameter of the trained interaction module, the first representation vector into a first query vector, and the second representation vector into a first key vector and a first value vector.

Step S152: The execution device calculates an attention score of the first query vector and the first key vector by using an attention mechanism, to obtain a first attention score.

Step S153: The execution device obtains, based on the first value vector, the first attention score, and the first representation vector, a fused representation vector corresponding to the data segment of the $i^{th}$ scale.

Step S154: The execution device maps, based on the parameter of the trained interaction module, the second representation vector into a second query vector, and the fused representation vector corresponding to the data segment of the $i^{th}$ scale into a second key vector and a second value vector.

Step S155: The execution device calculates an attention score of the second query vector and the second key vector by using the attention mechanism, to obtain a second attention score.

Step S156: The execution device obtains, based on the second value vector, the second attention score, and the second representation vector, a fused representation vector corresponding to the data segment of the $(i+1)^{th}$ scale.

It may be understood that, the representation learning model obtained in the inference phase inherits content and functions of related modules (the encoder and interaction module) in the training phase. The trained encoder includes content of the encoder in the training phase, and the trained interaction module includes content of the interaction module in the training phase. Details are not described herein again.

In this embodiment of this application, the trained encoder and the interaction module perform information interaction on representation vectors corresponding to data segments whose scales are different and adjacent in a same subset, so that a representation vector of the data segment of the $i^{th}$ scale includes information about a representation vector of the data segment of the $(i+1)^{th}$ scale, and the representation vector of the data segment of the $(i+1)^{th}$ scale includes information about the representation vector of the data segment of the $i^{th}$ scale. This can obtain a high-quality representation vector. In other words, the obtained representation vector includes as much data information as possible that is useful for a subsequent task, so that it is easier to extract useful information when a classifier or another prediction task is subsequently constructed. This improves performance of a downstream task (for example, classification). In addition, representation vectors corresponding to data frequency bands of different scales of the to-be-learned data may be learned. For example, for a song, a representation vector of the entire song may be learned, or a representation vector of an audio segment of the song may be learned. Therefore, representation vectors of different granularities may be provided for different tasks.

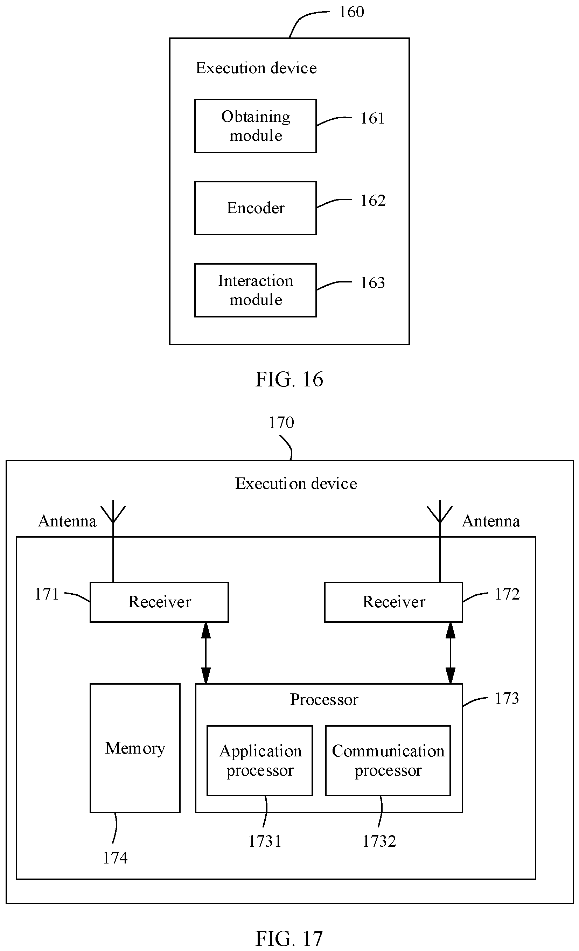

FIG. 16 is a diagram of a structure of an execution device according to an embodiment of this application.

An execution device 160 includes an obtaining module 161, an encoder 162, and an interaction module 163.

The obtaining module 161 is configured to obtain a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale.

The encoder 162 is configured to: receive the dataset, and extract features of the data segments based on a parameter of the encoder to obtain representation vectors corresponding to data segments of various scales, where the encoder is trained.

The interaction module 163 is configured to: receive the representation vectors, and perform, based on a parameter of the interaction module, information interaction on representation vectors corresponding to data segments of adjacent scales in the subset, to obtain fused representation vectors corresponding to the data segments of various scales, where the interaction module is trained.

In some embodiments, a representation learning module may include the obtaining module 161, the encoder 162, and the interaction module 163.

It should be noted that content such as information interaction and an execution process between modules/units in the execution device is based on a same concept as the method embodiments corresponding to FIG. 13 to FIG. 15 in this application. For specific content, refer to the descriptions in the foregoing method embodiments of this application, details are not described herein again.

An embodiment of this application further provides an execution device. FIG. 17 is a diagram of a structure of an execution device according to an embodiment of this application. The representation learning model described in embodiments corresponding to FIG. 13 to FIG. 15 may be deployed on an execution device 170, to implement functions of the execution device in embodiments corresponding to FIG. 13 to FIG. 15. Specifically, the execution device 170 includes a receiver 171, a transmitter 172, a processor 173, and a memory 174 (there may be one or more processors 173 in the execution device 170, and one processor is used as an example in FIG. 17). The processor 173 may include an application processor 1731 and a communication processor 1732. In some embodiments of this application, the receiver 171, the transmitter 172, the processor 173, and the memory 174 may be connected through a bus or in another manner.

The memory 174 may include a read-only memory and a random access memory, and provide instructions and data for the processor 173. A part of the memory 174 may further include a non-volatile random access memory (non-volatile random access memory, NVRAM). The memory 174 stores a processor and operation instructions, an executable module or a data structure, a subset thereof, or an extended set thereof. The operation instructions may include various operation instructions for implementing various operations.

The processor 173 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 173, or may be implemented by the processor 173. The processor 173 may be an integrated circuit chip and has a signal processing capability. In an implementation process, the steps in the foregoing methods can be completed by using an integrated logical circuit of hardware in the processor 173, or by using instructions in a form of software. The processor 173 may be a general-purpose processor, a digital signal processor (digital signal processor, DSP), a microprocessor or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 173 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory 174, and the processor 173 reads information in the memory 174 and completes the steps in the foregoing methods in combination with hardware of the processor.

The receiver 171 may be configured to: receive input digit or character information, and generate a signal input related to a related setting and function control of the execution device. The transmitter 172 may be configured to output digit or character information through a first port. The transmitter 172 may be further configured to send instructions to a disk group through the first port, to modify data in the disk group. The transmitter 172 may further include a display device like a display.

In this embodiment of this application, in one case, the application processor 1731 is configured to perform functions of the execution device in embodiments corresponding to FIG. 13 to FIG. 15. It should be noted that, for a specific implementation in which the application processor 1731 performs the functions of the execution device in embodiments corresponding to FIG. 13 to FIG. 15 and beneficial effects brought by the application processor 1731, refer to descriptions in the method embodiments corresponding to FIG. 13 to FIG. 15. Details are not described herein again.

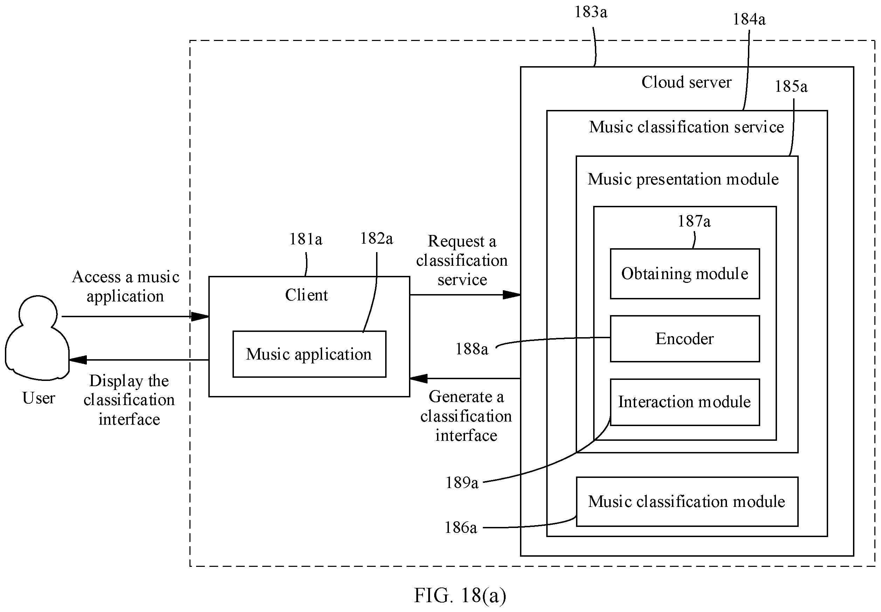

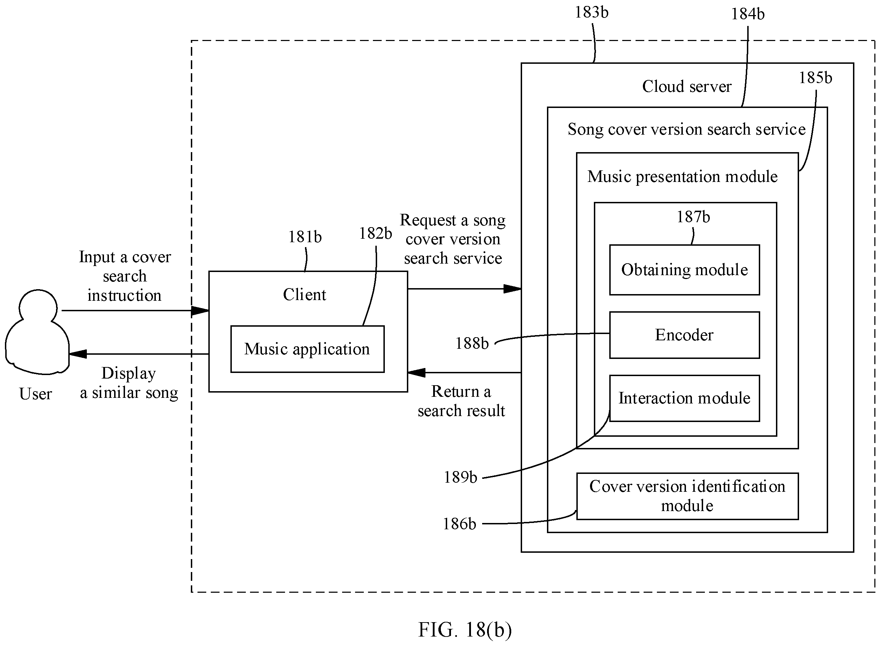

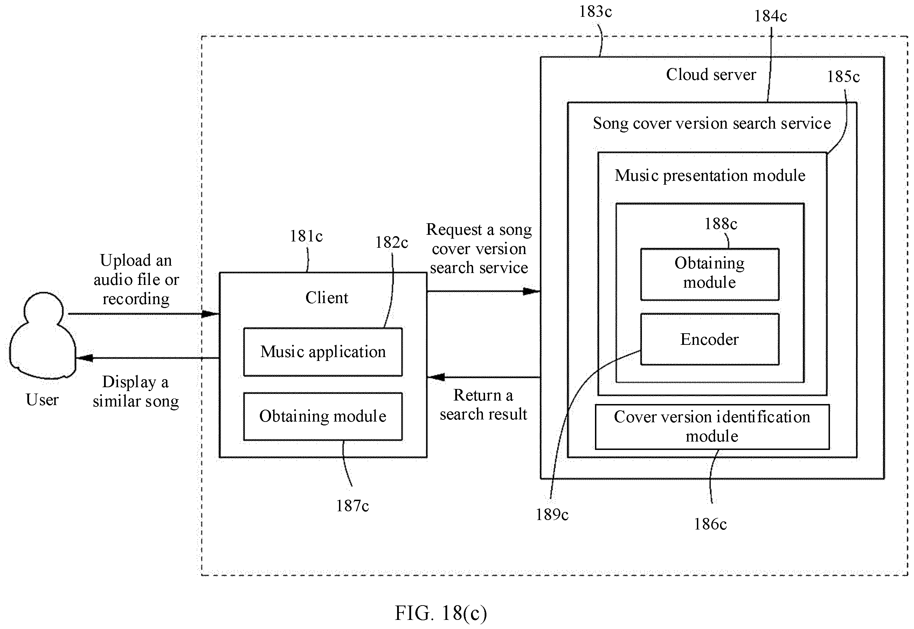

The following describes an example of an application scenario of the representation learning model in this embodiment of this application by using an example in which the representation learning model provided in this application is applied to representation learning of audio data. FIG. 18 (a) is a diagram of a music classification scenario according to an embodiment of this application. FIG. 18 (b) is a diagram of a scenario of searching for a cover version of a song according to an embodiment of this application. FIG. 18 (c) is a diagram of a similar song recommendation scenario according to an embodiment of this application.

As shown in FIG. 18 (a), a music application 182a is deployed in a client 181a, and a music classification service 184a is deployed in a cloud server 183a. The music classification service 184a includes a music representation module 185a and a music classification module 186a. The representation learning model provided in this embodiment of this application is deployed in the music representation module, and a representation vector of an audio file is extracted by using the representation learning model. For example, the representation vector may be 512 dimensions. The music classification module obtains the representation vector of the audio file from the music representation module, and then uses the representation vector to determine a category.

The music representation module 185a includes an obtaining module 187a, an encoder 188a, and an interaction module 189a. The music representation module 185a obtains an audio file. The audio file may be a moving picture experts group audio layer 3 (Moving Picture Experts Group Audio Layer III, MP3) format, a wave audio file (Wave Audio File, WAV), or the like. This is not specifically limited in this embodiment of this application.

The music classification module 186a may be implemented as a classifier. The classifier may use any existing classifier model, for example, a support vector machine (SVM), a neural network, and k-nearest neighbor classification. This is not specifically limited in this embodiment of this application.

Specifically, if the client 181a detects that a piece of music is added to a music library of the client 181a, the client 181a sends a request to the cloud server 183a to request the music classification service in the cloud server. After receiving the request, the cloud server 183a invokes a port of the music classification service to perform a music classification operation. The obtaining module 187a, the encoder 188a, and the interaction module 189a implement the functions shown in FIG. 16 to obtain fused representation vectors of audio segments. The classifier obtains the fused representation vectors of audio segments, and then performs category determining based on the fused representation vectors, to determine a category corresponding to a music file. The cloud server 182a returns the category corresponding to the music file to the client 181a. The client 181a generates or updates a classification interface based on the category corresponding to the music file. When the user accesses the music application 182a in the client 181a, the music application 182a responds to an operation of the user, and displays the classification interface.

In the application scenario shown in FIG. 18 (a), the presentation learning model provided in this embodiment of this application is trained and tested by using disclosed standard datasets MagnaTagATune and GTZAN. Two classification indicators are used: Receiver Operating Characteristic-Area Under roc Curve (ROC-AUC) and precision recall -Area Under roc Curve (PR-AUC). Receiver Operating Characteristic refers to a receiver operating characteristic curve, Area Under roc Curve refers to the area under the ROC curve, precision refers to a precision rate, and recall refers to a recall rate. Higher values of these indicators indicate better classification effect. The representation learning model provided in this embodiment of this application and another existing solution (for example, music representation comparison learning officially implemented by PyTorch: CLMR, BYOL-A, Multi-format, and COLA) in different encoders (SampleCNN, a four-layer full convolution network: FCN-4, and a seven-layer full convolution network: FCN-7) use a standard dataset MagnaTagATune or GTZAN to obtain experiment results. The experiment results are compared as shown in Table 1 and Table 2.

**Table 1 Overall performance comparison of music classification models (MagnaTagATune)**

| Method | Encoder | ROC-AUC | PR-AUC |
|---|---|---|---|
| CLMR | SampleCNN | 89.0 | 35.8 |
| BYOL-A | FCN-4 | 89.1 | 35.8 |
| | FCN-7 | 89.2 | 36.3 |
| Multi-format | FCN-4 | 88.9 | 35.4 |
| | FCN-7 | 87.0 | 31.3 |
| Presentation learning method in this application | FCN-4 | 89.5 | 36.7 |
| | FCN-7 | 89.4 | 36.4 |

**Table 2 Overall performance comparison of music classification models (GTZAN)**

| Method | Encoder | ROC-AUC | PR-AUC |
|---|---|---|---|
| BYOL-A | FCN-4 | 92.6 | 65.6 |
| | FCN-7 | 94.6 | 74.8 |
| Multi-format | FCN-4 | 92.3 | 65.5 |
| | FCN-7 | 93.2 | 71.2 |
| Presentation learning method in this application | FCN-4 | 93.2 | 66.8 |
| | FCN-7 | 94.7 | 77.2 |

It can be learned from Table 1 and Table 2 that the representation learning method in this application being applied to music classification can effectively improve music classification effect, to be specific, quality of a representation vector extracted by using the learning representation model provided in this embodiment of this application is high.

A difference between FIG. 18 (b) and FIG. 18 (a) lies in that a song cover version search service 184b is deployed in a cloud server 183b. The song cover version search service 184b includes a music representation module 185b and a cover version identification module 186b. The cover version identification module 186b obtains a representation vector of an audio file from the music representation module 185b, then identifies the audio file by using the representation vector, and searches for a song file with a highest similarity to the audio file from the music library.

The cover version identification module 185b may use any existing audio identification apparatus, and mainly rely on an audio identification method to identify a song. For example, a fingerprint feature technology is used to determine a fingerprint feature of a to-be-identified audio, and a song that matches the fingerprint feature of the to-be-identified audio is obtained through matching from an audio library as a song in the audio.

Specifically, vector extraction may be performed on each song in a song library by using a representation learning model in advance, and vectors are stored in a vector index library (for example, a Faiss engine). A user accesses a music application 182b in a client 181b, and inputs a cover search instruction into the music application 182b. The music application 182b responds to the cover search instruction, and sends a request to the cloud server 183b by using the client 181b, to request a song cover version search service in the cloud server. After receiving the request, the cloud server invokes a port of the song cover version search service, to perform a song cover version search operation. The obtaining module 187a, the encoder 188a, and the interaction module 189a implement the functions shown in FIG. 16 to obtain fused representation vectors of audio segments. The cover version identification module 186b obtains fused representation vectors of audio segments, then uses a k-nearest neighbor search Faiss engine to search for similar songs (for example, first 100 songs with a highest similarity) from a music library based on a cosine similarity between vectors, and obtains a search result. Based on the search result, a literal repetition degree is calculated by using name information of an entered song and name information in the music library, songs are filtered based on a preset threshold, and a list of retained songs after filtering is returned.

In some other embodiments, the obtaining module 187b or the encoder 188b is deployed to the client 181b. As shown in FIG. 18 (c), a difference between FIG. 18 (c) and FIG. 18 (b) lies in that an obtaining module 187c is deployed on a client 181c. After obtaining a music file or recording uploaded by a user, the client 181c uses the obtaining module to segment the music file, to obtain audio segments of each scale. The client 181c only needs to upload the audio segments of each scale to a cloud server 183c, and does not need to upload the entire music file to the cloud server 183c. This reduces an amount of transmitted data and improves efficiency.

In some other embodiments, both the obtaining module 187c and an encoder 188c are deployed on the client 181c, and after obtaining the music file uploaded by the user, the client 181c uses the obtaining module 187c to segment the music file to obtain audio segments of various scales. The encoder 188c extracts features of the audio segments of various scales, to obtain corresponding representation vectors of the audio segments of various scales. The client 181c only needs to upload the representation vectors corresponding to the audio segments of various scales to the cloud server 183c. This further reduces an amount of transmitted data and improves efficiency.

In the application scenarios shown in FIG. 18 (b) and FIG. 18 (c), a detailed test is performed by using public data and service data. Tests have been performed on public datasets SHS100K-SUB and Covers80. Three accuracy indicators MAP, Precision@10, and MR1 are used. A higher indicator indicates better recognition effect. The following Table 3 shows comparison between experimental results of the representation learning method in this application and an existing method (for example, Ki-Net, TPP-Net, FCN, CQT-Net, BYOL-A, Multi-format, COLA).

**Table 3**

| SHS100K-SUB | Method | MAP | Precision@10 | MR1 |
|---|---|---|---|---|
| | Ki-Net | 0.112 | 0.156 | 68.33 |
| | TPP-Net | 0.267 | 0.217 | 35.75 |
| | FCN | 0.289 | 0.230 | 34.86 |
| | CQT-Net | 0.446 | 0.323 | 18.09 |
| | Supervised baseline | 0.433 | 0.317 | 21.13 |
| | BYOL-A | 0.462 | 0.334 | 19.78 |
| | Multi-format | 0.477 | 0.339 | 19.74 |
| | COLA | 0.472 | 0.340 | 20.15 |
| | Presentation learning method in this application | 0.522 | 0.358 | 14.53 |
| Covers80 | Ki-Net | 0.368 | 0.052 | 32.10 |
| | TPP-Net | 0.5 | 0.068 | 17.08 |
| | FCN | 0.529 | 0.073 | 12.50 |
| | CQT-Net | 0.666 | 0.077 | 12.20 |
| | Supervised baseline | 0.624 | 0.079 | 14.43 |
| | BYOL-A | 0.730 | 0.084 | 6.67 |
| | Multi-format | 0.718 | 0.083 | 8.83 |
| | COLA | 0.746 | 0.085 | 7.86 |
| | Presentation learning method in this application | 0.748 | 0.086 | 7.53 |

It can be learned from the foregoing Table 3 that the representation learning method in this application being applied to a cover version search scenario significantly improves effect, to be specific, quality of a representation vector extracted by using the learning representation model provided in this embodiment of this application is high.

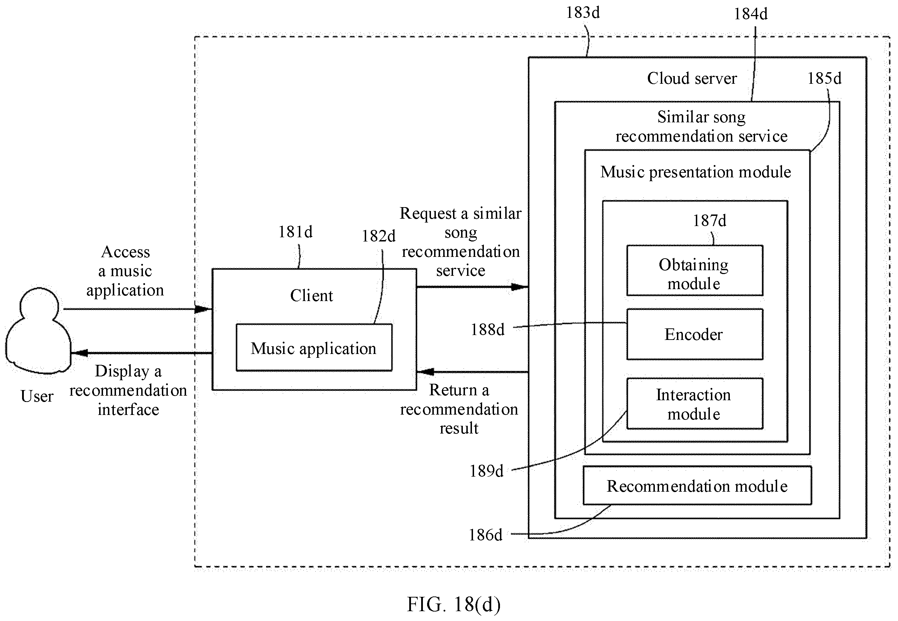

A difference between FIG. 18 (d) and FIG. 18 (a) lies in that a similar song recommendation service 184d is deployed in a cloud server 183d. The similar song recommendation service 184d includes a music representation module 185d and a recommendation module 186d. The recommendation module 186d obtains a representation vector of an audio file from the music representation module 185d, identifies the audio file by using the representation vector, and searches for, from a music library, a song file that a user is listening to with a highest similarity to the audio file.

The similar song recommendation module 185d may use any existing audio identification apparatus, and mainly rely on an audio identification method to identify a song. For example, a fingerprint feature technology is used to determine a fingerprint feature of a to-be-identified audio, and a song that matches the fingerprint feature of the to-be-identified audio is obtained through matching from an audio library as a song in the audio.

Specifically, features of all songs in a song library may be extracted by using a representation learning model in advance, to obtain representation vectors of all the songs, and the representation vectors are stored in a vector index library. A user accesses a music application 182d in a client 181d, the music application 182d detects a song that the user is listening to, and the music application 182d sends a request to the cloud server 183d by using the client 181d, to request a similar song recommendation service in the cloud server 183d. After receiving the request, the server invokes a port of the similar song recommendation service 184d to perform a similar song recommendation operation. The recommendation module 186d obtains fused representation vectors of all audio segments, and then uses a k-nearest neighbor search engine to search for similar songs (for example, top 100 songs with a highest similarity) from a music library based on a cosine similarity between vectors, and obtains a search result. Based on the search result, secondary filtering is performed based on a song language tag, version (whether the version is a studio version), and a style tag, songs with a consistent language and style and high quality are retained, and a selected list of top 30 songs with a highest similarity is returned.

It may be understood that deployment of each module of a representation learning model may be based on an actual situation. For example, in a song identification scenario, the obtaining module or the obtaining module and the encoder may be deployed on the client.

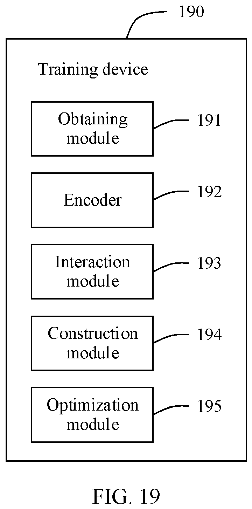

FIG. 19 is a diagram of a structure of a training device according to an embodiment of this application.

A training device 190 includes an obtaining module 191, an encoder 192, an interaction module 193, a construction module 194, and an optimization module 195.

The obtaining module 191 is configured to obtain a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale.

The encoder 192 is configured to: receive the dataset, and extract features of the data segments based on a parameter of the encoder to obtain representation vectors corresponding to data segments of various scales.

The interaction module 193 is configured to: receive the representation vectors, and perform, based on a parameter of the interaction module, information interaction on representation vectors corresponding to data segments of adjacent scales in the subset, to obtain fused representation vectors corresponding to the data segments of various scales.

The construction module 194 is configured to construct an objective function based on the fused representation vectors.

The optimization module 195 is configured to optimize the objective function to adjust the parameter of the encoder and the parameter of the interaction module, so that the encoder and the interaction module learn a representation vector of the to-be-learned data.

It should be noted that content such as information interaction and an execution process between modules/units in the training device is based on a same concept as the method embodiments corresponding to FIG. 1 to FIG. 12 in this application. For specific content, refer to the descriptions in the foregoing method embodiments of this application, details are not described herein again.

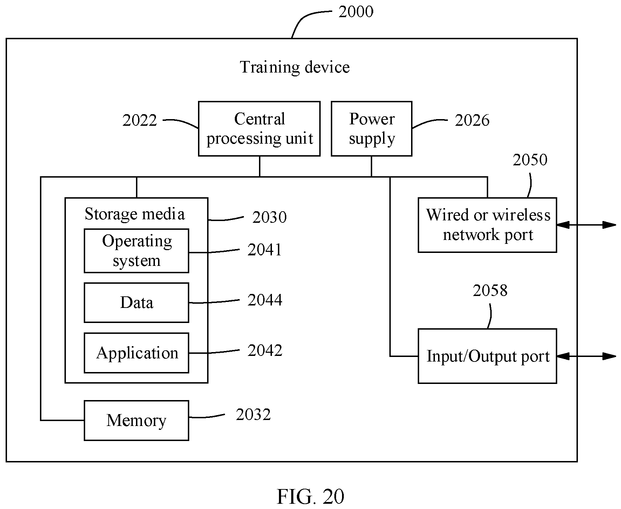

FIG. 20 is a diagram of a structure of a training device according to an embodiment of this application.

The training device 190 described in the embodiment corresponding to FIG. 19 may be deployed on a training device 2000, to implement a function of the training device corresponding to FIG. 19 or the method embodiments corresponding to FIG. 1 to FIG. 12. Specifically, the training device 2000 is implemented by one or more servers. The training device 2000 may have a large difference due to different configurations or performance, and may include one or more central processing units (central processing units, CPU) 2022 (for example, one or more processors) and a memory 2032, one or more storage media 2030 (for example, one or more mass storage devices) that store an application 2042 or data 2044. The memory 2032 and the storage medium 2030 may be used for temporary storage or permanent storage. The program stored in the storage medium 2030 may include one or more modules (not shown in the figure), and each module may include a series of instruction operations for the training device. Further, the central processing unit 2022 may be configured to communicate with the storage medium 2030, and perform, on the training device 2000, the series of instruction operations in the storage medium 2030.

The training device 2000 may further include one or more power supplies 2026, one or more wired or wireless network ports 2050, one or more input/output ports 2058, and/or one or more operating systems 2041, for example, Windows ServerTM, Mac OS XTM, UnixTM, LinuxTM, and FreeBSDTM.

In this embodiment of this application, in one case, the central processing unit 2022 is configured to implement the functions of the training device in the embodiment corresponding to FIG. 19 or the method embodiments corresponding to FIG. 1 to FIG. 12. It should be noted that, for a specific implementation in which the central processing unit 2022 performs the functions of the training device in embodiments corresponding to FIG. 1 to FIG. 12 and beneficial effects brought by the central processing unit 2022, refer to descriptions in the method embodiments corresponding to FIG. 11 and FIG. 12. Details are not described herein again.

In this embodiment of this application, in another case, the central processing unit 2022 is configured to implement the functions of the training device in the embodiment corresponding to FIG. 19. It should be noted that for a specific implementation in which the central processing unit 2022 performs the functions of the training device in the embodiment corresponding to FIG. 19 and beneficial effects brought by the central processing unit 2022, refer to descriptions in the method embodiments corresponding to FIG. 19. Details are not described herein again.

An embodiment of this application further provides a computer-readable storage medium. The computer-readable storage medium stores a program. When the program runs on a computer, the computer is enabled to perform the steps performed by the training device in the embodiments corresponding to FIG. 1 to FIG. 12, or perform the steps performed by the execution device in the embodiments corresponding to FIG. 13 to FIG. 15, or perform the steps performed by the execution device in the embodiment corresponding to FIG. 16, or perform the steps performed by the training device in the embodiment corresponding to FIG. 17.

An embodiment of this application further provides a computer program product. When the computer program product runs on a computer, the computer is enabled to perform the steps performed by the training device in the embodiments corresponding to FIG. 1 to FIG. 12, or perform the steps performed by the execution device in the embodiments corresponding to FIG. 13 to FIG. 15, or perform the steps performed by the execution device in the embodiment corresponding to FIG. 16, or perform the steps performed by the training device in the embodiment corresponding to FIG. 17.

**Claims**

1. A representation learning method, wherein the method comprises:

   obtaining a dataset of to-be-learned data, wherein the dataset comprises at least one subset, the subset comprises data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale;
   inputting the dataset into an encoder, and extracting features of the data segments based on a parameter of the encoder to obtain representation vectors corresponding to data segments of various scales;
   inputting the representation vectors into an interaction module, and performing, based on a parameter of the interaction module, information interaction on representation vectors corresponding to data segments of adjacent scales in the subset, to obtain fused representation vectors corresponding to the data segments of various scales;
   constructing an objective function based on the fused representation vectors; and
   optimizing the objective function to adjust the parameter of the encoder and the parameter of the interaction module, so that the encoder and the interaction module learn a representation vector of the to-be-learned data.

2. The method according to claim 1, wherein the inputting the representation vectors into an interaction module, and performing, based on a parameter of the interaction module, information interaction on representation vectors corresponding to data segments of adjacent scales in the subset, to obtain fused representation vectors corresponding to the data segments of various scales comprises:

   inputting the representation vectors into the interaction module;
   determining that to-be-processed scales for an $n^{th}$ time are the $i^{th}$ scale and the $(i+1)^{th}$ scale, assigning an initial value of n to 1, and cyclically performing the following operation until n=K-1, wherein n=i, and n is an integer greater than or equal to 1; and
   performing, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

3. The method according to claim 2, wherein when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

4. The method according to claim 2 or 3, wherein the performing, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales comprises:

   using the representation vector corresponding to the data segment of the $i^{th}$ scale as a first representation vector, and using the representation vector corresponding to the data segment of the $(i+1)^{th}$ scale as a second representation vector;
   mapping, based on the parameter of the interaction module, the first representation vector into a first query vector, and the second representation vector into a first key vector and a first value vector;
   calculating an attention score of the first query vector and the first key vector by using an attention mechanism, to obtain a first attention score;

obtaining, based on the first value vector, the first attention score, and the first representation vector, a fused representation vector corresponding to the data segment of the $i^{th}$ scale;

mapping, based on the parameter of the interaction module, the second representation vector into a second query vector, and the fused representation vector corresponding to the data segment of the $i^{th}$ scale into a second key vector and a second value vector;

calculating an attention score of the second query vector and the second key vector by using the attention mechanism, to obtain a second attention score; and

obtaining, based on the second value vector, the second attention score, and the second representation vector, a fused representation vector corresponding to the data segment of the $(i+1)^{th}$ scale.

5. The method according to any one of claims 1 to 4, wherein the obtaining a dataset of to-be-learned data comprises:

obtaining the to-be-learned data and a preset quantity of scale types;

segmenting the to-be-learned data to obtain data segments; and

segmenting a data segment of a smallest scale, until a quantity of scale types in the subset reaches the preset quantity of scale types.

6. The method according to any one of claims 1 to 5, wherein the constructing an objective function based on the fused representation vectors comprises:

obtaining an overall representation vector of other to-be-learned data, wherein the other to-be-learned data and the to-be-learned data are in a same batch, and the overall representation vector is a representation vector corresponding to a data segment of a largest scale in the other to-be-learned data;

calculating a similarity between each fused representation vector and the overall representation vector;

for each scale, selecting a fused representation vector corresponding to a lowest similarity; and

constructing the objective function based on the fused representation vector that is selected.

7. The method according to claim 6, wherein the constructing the objective function based on the fused representation vector that is selected comprises:

mapping the fused representation vector that is selected into a positive sample;

mapping the overall representation vector corresponding to the other to-be-learned data in the same batch into a negative sample; and

constructing, based on comparison learning, the objective function by using the positive sample and the negative sample as sub-elements of the objective function.

8. The method according to claim 7, wherein the optimizing the objective function to adjust the parameter of the encoder and the parameter of the interaction module, so that the encoder and the interaction module learn a representation vector of the to-be-learned data comprises:

using positive samples corresponding to two adjacent scales as a positive sample pair;

calculating, by using the objective function, a first similarity between a positive sample and a negative sample corresponding to a largest scale and a second similarity of the positive sample pair; and

optimizing the objective function based on the first similarity and the second similarity, to update the parameter of the encoder and the parameter of the interaction module.

9. The method according to any one of claims 1 to 8, wherein the to-be-learned data is audio data, text data, or video data.

10. A representation learning method, wherein the method comprises:

obtaining a dataset of to-be-learned data, wherein the dataset comprises at least one subset, the subset comprises data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale;

inputting the dataset into a trained encoder, and extracting features of the data segments based on a parameter of the encoder to obtain representation vectors corresponding to data segments of various scales; and

inputting the representation vectors into a trained interaction module, and performing, based on a parameter of the interaction module, information interaction on representation vectors corresponding to data segments of adjacent scales in the subset, to obtain fused representation vectors corresponding to the data segments of various scales, so as to complete learning of a representation vector of the to-be-learned data.

11. The method according to claim 10, wherein the inputting the representation vectors into a trained interaction module, and performing, based on a parameter of the interaction module, information interaction on representation vectors corresponding to data segments of adjacent scales in the subset, to obtain fused representation vectors corresponding to the data segments of various scales comprises:

inputting the representation vectors into the trained interaction module;
determining that to-be-processed scales for an $n^{th}$ time are the $i^{th}$ scale and the $(i+1)^{th}$ scale, assigning an initial value of n to 1, and cyclically performing the following operation until n=K-1, wherein n=i, and n is an integer greater than or equal to 1; and
performing, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

12. The method according to claim 11, wherein when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

13. The method according to claim 11 or 12, wherein the performing, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales comprises:

using the representation vector corresponding to the data segment of the $i^{th}$ scale as a first representation vector, and using the representation vector corresponding to the data segment of the $(i+1)^{th}$ scale as a second representation vector;
mapping, based on the parameter of the trained interaction module, the first representation vector into a first query vector, and the second representation vector into a first key vector and a first value vector;
calculating an attention score of the first query vector and the first key vector by using an attention mechanism, to obtain a first attention score;
obtaining, based on the first value vector, the first attention score, and the first representation vector, a fused representation vector corresponding to the data segment of the $i^{th}$ scale;
mapping, based on the parameter of the trained interaction module, the second representation vector into a second query vector, and the fused representation vector corresponding to the data segment of the $i^{th}$ scale into a second key vector and a second value vector;
calculating an attention score of the second query vector and the second key vector by using the attention mechanism, to obtain a second attention score; and
obtaining, based on the second value vector, the second attention score, and the second representation vector, a fused representation vector corresponding to the data segment of the $(i+1)^{th}$ scale.

14. The method according to any one of claims 10 to 13, wherein the obtaining a dataset of to-be-learned data comprises:

obtaining the to-be-learned data and a preset quantity of scale types;
segmenting the to-be-learned data to obtain data segments; and
segmenting a data segment of a smallest scale, until a quantity of scale types in the subset reaches the preset quantity of scale types.

15. A training device, wherein the training device comprises:

an obtaining module, configured to obtain a dataset of to-be-learned data, wherein the dataset comprises at least one subset, the subset comprises data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale;
an encoder, configured to: receive the dataset, and extract features of the data segments based on a parameter of the encoder to obtain representation vectors corresponding to data segments of various scales;

an interaction module, configured to: receive the representation vectors, and perform, based on a parameter of the interaction module, information interaction on representation vectors corresponding to data segments of adjacent scales in the subset, to obtain fused representation vectors corresponding to the data segments of various scales;

a construction module, configured to construct an objective function based on the fused representation vectors; and

an optimization module, configured to optimize the objective function to adjust the parameter of the encoder and the parameter of the interaction module, so that the encoder and the interaction module learn a representation vector of the to-be-learned data.

16. The device according to claim 15, wherein the interaction module is specifically configured to:

receive the representation vectors;

determine that to-be-processed scales for an $n^{th}$ time are the $i^{th}$ scale and the $(i+1)^{th}$ scale, assign an initial value of n to 1, and cyclically perform the following operations until n=K-1, wherein n=i, and n is an integer greater than or equal to 1; and

perform, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

17. The device according to claim 16, wherein when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

18. The device according to claim 16 or 17, wherein the performing, based on the parameter of the interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales specifically comprises:

using the representation vector corresponding to the data segment of the $i^{th}$ scale as a first representation vector, and using the representation vector corresponding to the data segment of the $(i+1)^{th}$ scale as a second representation vector;

mapping, based on the parameter of the interaction module, the first representation vector into a first query vector, and the second representation vector into a first key vector and a first value vector;

calculating an attention score of the first query vector and the first key vector by using an attention mechanism, to obtain a first attention score;

obtaining, based on the first value vector, the first attention score, and the first representation vector, a fused representation vector corresponding to the data segment of the $i^{th}$ scale;

mapping, based on the parameter of the interaction module, the second representation vector into a second query vector, and the fused representation vector of the data segment of the $i^{th}$ scale into a second key vector and a second value vector;

calculating an attention score of the second query vector and the second key vector by using the attention mechanism, to obtain a second attention score; and

obtaining, based on the second value vector, the second attention score, and the second representation vector, a fused representation vector corresponding to the data segment of the $(i+1)^{th}$ scale.

19. The device according to any one of claims 15 to 18, wherein the obtaining module is specifically configured to:

obtain the to-be-learned data and a preset quantity of scale types;

segment the to-be-learned data to obtain data segments; and

segment a data segment of a smallest scale, until a quantity of scale types in the subset reaches the preset quantity of scale types.

20. The device according to any one of claims 15 to 19, wherein the construction module is specifically configured to:

obtain an overall representation vector of other to-be-learned data, wherein the other to-be-learned data and the to-be-learned data are in a same batch, and the overall representation vector is a representation vector corresponding to a data segment of a largest scale in the other to-be-learned data;

calculate a similarity between each fused representation vector and the overall representation vector;

for each scale, select a fused representation vector corresponding to a lowest similarity; and

construct the objective function based on the fused representation vector that is selected.

21. The device according to claim 20, wherein the constructing the objective function based on the fused representation vector that is selected comprises:

mapping the fused representation vector that is selected into a positive sample;

mapping the overall representation vector corresponding to the other to-be-learned data in the same batch into a negative sample; and

constructing, based on comparison learning, the objective function by using the positive sample and the negative sample as sub-elements of the objective function.

22. The device according to claim 21, wherein the optimization module is specifically configured to:

use positive samples corresponding to two adjacent scales as a positive sample pair;

calculate, by using the objective function, a first similarity between a positive sample and a negative sample corresponding to a largest scale and a second similarity of the positive sample pair; and

optimize the objective function based on the first similarity and the second similarity, to update the parameter of the encoder and the parameter of the interaction module.

23. The device according to any one of claims 15 to 22, wherein the to-be-learned data is audio data, text data, or video data.

24. An execution device, wherein the execution device comprises:

an obtaining module, configured to obtain a dataset of to-be-learned data, wherein the dataset comprises at least one subset, the subset comprises data segments of K scales, K is an integer greater than or equal to 2, in the subset, a data segment of an $i^{th}$ scale is a part of a data segment of an $(i+1)^{th}$ scale, i is less than or equal to K-1, and there are one or more data segments of each scale;

an encoder, configured to: receive the dataset, and extract features of the data segments based on a parameter of the encoder to obtain representation vectors corresponding to data segments of various scales, wherein the encoder is trained; and

an interaction module, configured to: receive the representation vectors, and perform, based on a parameter of the interaction module, information interaction on representation vectors corresponding to data segments of adjacent scales in the subset, to obtain fused representation vectors corresponding to the data segments of various scales, wherein the interaction module is trained.

25. The device according to claim 24, wherein the interaction module is specifically configured to:

receive the representation vectors;

determine that to-be-processed scales for an $n^{th}$ time are the $i^{th}$ scale and the $(i+1)^{th}$ scale, assign an initial value of n to 1, and cyclically perform the following operations until n=K-1, wherein n=i, and n is an integer greater than or equal to 1; and

perform, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales.

26. The device according to claim 25, wherein when n is an integer greater than or equal to 2, the representation vector corresponding to the data segment of the $i^{th}$ scale is a fused representation vector obtained after information interaction is performed on the data segment of the $i^{th}$ scale for an $(n-1)^{th}$ time.

27. The device according to claim 25 or 26, wherein the performing, based on the parameter of the trained interaction module for an $n^{th}$ time, information interaction on representation vectors corresponding to the data segments of the $i^{th}$ scale and the $(i+1)^{th}$ scale in the subset, to obtain the fused representation vectors corresponding to the data segments of various scales comprises:

using the representation vector corresponding to the data segment of the $i^{th}$ scale as a first representation vector, and using the representation vector corresponding to the data segment of the $(i+1)^{th}$ scale as a second representation vector;

mapping, based on the parameter of the trained interaction module, the first representation vector into a first query vector, and the second representation vector into a first key vector and a first value vector;

calculating an attention score of the first query vector and the first key vector by using an attention mechanism, to obtain a first attention score;

obtaining, based on the first value vector, the first attention score, and the first representation vector, a fused representation vector corresponding to the data segment of the $i^{th}$ scale;

mapping, based on the parameter of the trained interaction module, the second representation vector into a second query vector, and the fused representation vector of the data segment of the $i^{th}$ scale into a second key vector and a second value vector;

calculating an attention score of the second query vector and the second key vector by using the attention mechanism, to obtain a second attention score; and

obtaining, based on the second value vector, the second attention score, and the second representation vector, a fused representation vector corresponding to the data segment of the $(i+1)^{th}$ scale.

28. The device according to any one of claims 24 to 27, wherein the obtaining module comprises:

obtaining the to-be-learned data and a preset quantity of scale types;

segmenting the to-be-learned data to obtain data segments; and

segmenting a data segment of a smallest scale, until a quantity of scale types in the subset reaches the preset quantity of scale types.

29. A computer device, comprising a memory and a processor, wherein the memory is configured to store computer-readable instructions, and the processor is configured to read the computer-readable instructions and implement the method according to any one of claims 1 to 9 or the method according to any one of claims 10 to 14.

30. A computer storage medium, storing computer-readable instructions, wherein when the computer-readable instructions are executed by a processor, the method according to any one of claims 1 to 9 or the method according to any one of claims 10 to 14 is implemented.

31. A computer program product, wherein the computer program product comprises computer-readable instructions, and when the computer-readable instructions are executed by a processor, the method according to any one of claims 1 to 9 or the method according to any one of claims 10 to 14 is implemented.

Intelligent information chain

→

| Intelligent product and industry application |
|---|

| Translation/Text analysis/... | Voice/Vision/Image/... |

| Data | Data processing: | Data training/ Machine learning/Deep learning | Search/ Inference/ Decision-making | ... |

| Infrastructure | Sensor | Intelligent chip | Basic platform | ... |

IT value chain

FIG. 1

EP 4 521 310 A1

FIG. 2

A training device obtains a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K−1, and there are one or more data segments of each scale — S31

The training device inputs the dataset into an encoder, and extracts features of the data segments based on a parameter of the encoder, to obtain representation vectors corresponding to data segments of various scales — S32

The training device inputs the representation vectors into an interaction module, and performs, based on a parameter of the interaction module, information interaction on representation vectors corresponding to data segments of adjacent scales in the subset, to obtain fused representation vectors corresponding to the data segments of various scales — S33

The training device constructs an objective function based on the fused representation vectors — S34

The training device optimizes the objective function to adjust the parameter of the encoder and the parameter of the interaction module, so that the encoder and the interaction module learn a representation vector of the to-be-learned data — S35

FIG. 3

FIG. 4

| Output layer | — 540 |

| Hidden layer n | — 53n |

| Hidden layer 2 | — 532 |

| Hidden layer 1 | — 531 |

Neural network layer 530

| 526 |
| 525 |
| 524 |
| 523 |
| 522 |
| 521 |

Convolutional layer/Pooling layer 520

Convolutional neural network (CNN) 500

| Input layer | — 510 |

| To-be-learned data |

FIG. 5

A training device inputs representation vectors into an interaction module ⟶ S61

The training device determines that to-be-processed scales for an $n^{th}$ time are an $i^{th}$ scale and an $(i+1)^{th}$ scale, assigns an initial value of n to 1, and cyclically performs the following operation until n=K−1, where n=i, and n is an integer greater than or equal to 1 ⟶ S62

The training device performs, based on a parameter of the interaction module for an $n^{th}$ time, information interaction on representation vectors corresponding to data segments of the $i^{th}$ scale and the $(i+1)^{th}$ scale in a subset, to obtain fused representation vectors corresponding to data segments of various scales ⟶ S63

FIG. 6

A training device uses a representation vector corresponding to a data segment of an $i^{th}$ scale as a first representation vector, uses a representation vector corresponding to a data segment of an $(i+1)^{th}$ scale as a second representation vector, and maps, based on a parameter of an interaction module, the first representation vector into a first query vector, and the second representation vector into a first key vector and a first value vector ⎯ S71

The training device calculates an attention score of the first query vector and the first key vector by using an attention mechanism, to obtain a first attention score ⎯ S72

The training device obtains, based on the first value vector, the first attention score, and the first representation vector, a fused representation vector corresponding to the data segment of the $i^{th}$ scale ⎯ S73

The training device maps, based on the parameter of the interaction module, the second representation vector into a second query vector, and the fused representation vector corresponding to the data segment of the $i^{th}$ scale into a second key vector and a second value vector ⎯ S74

The training device calculates an attention score of the second query vector and the second key vector by using the attention mechanism, to obtain a second attention score ⎯ S75

The training device obtains, based on the second value vector, the second attention score, and the second representation vector, a fused representation vector corresponding to the data segment of the $(i+1)^{th}$ scale ⎯ S76

FIG. 7

FIG. 8

FIG. 9

A training device maps a fused representation vector that is selected into a positive sample ⎯ S101

The training device maps an overall representation vector corresponding to other to-be-learned data in a same batch into a negative sample ⎯ S102

The training device constructs, based on comparison learning, an objective function by using the positive sample and the negative sample as sub-elements of the objective function ⎯ S103

FIG. 10

A training device uses positive samples corresponding to two adjacent scales as a positive sample pair ⎯ S111

The training device calculates, by using an objective function, a first similarity between a positive sample and a negative sample corresponding to a largest scale and a second similarity of the positive sample pair ⎯ S112

The training device optimizes the objective function based on the first similarity and the second similarity, to update a parameter of an encoder and a parameter of an interaction module ⎯ S113

FIG. 11

Shorten                           Shorten

| Representation vector corresponding to a first scale | Representation vector corresponding to a second scale | Representation vector corresponding to a third scale |
|---|---|---|

Shorten

Overall representation vector of a song

Extend

Overall representation vector of another song in a same batch

FIG. 12

An execution device obtains a dataset of to-be-learned data, where the dataset includes at least one subset, the subset includes data segments of K scales, K is an integer greater than or equal to 2, in the subset, a data segment of an $i^{th}$ scale is a part of a data segment of an $(i+1)^{th}$ scale, i is less than or equal to K−1, and there are one or more data segments of each scale

S131

The execution device inputs the dataset into a trained encoder, and extracts features of the data segments based on a parameter of the encoder, to obtain representation vectors corresponding to data segments of various scales

S132

The execution device inputs the representation vectors into a trained interaction module, and performs, based on a parameter of the interaction module, information interaction on representation vectors corresponding to data segments of adjacent scales in the subset, to obtain fused representation vectors corresponding to the data segments of various scales, so as to complete learning of a representation vector of the to-be-learned data

S133

FIG. 13

An execution device inputs representation vectors into a trained interaction module

S141

The execution device determines that to-be-processed scales for an $n^{th}$ time are an $i^{th}$ scale and an $(i+1)^{th}$ scale, assigns an initial value of n to 1, and cyclically performs the following operation until n=K−1, where n=i, and n is an integer greater than or equal to 1

S142

The execution device performs, based on a parameter of the trained interaction module for an $n^{th}$ time, information interaction on representation vectors corresponding to data segments of the $i^{th}$ scale and the $(i+1)^{th}$ scale in a subset, to obtain fused representation vectors corresponding to data segments of various scales

S143

FIG. 14

An execution device uses a representation vector corresponding to a data segment of an i$^{th}$ scale as a first representation vector, uses a representation vector corresponding to a data segment of an (i+1)$^{th}$ scale as a second representation vector, and maps, based on a parameter of a trained interaction module, the first representation vector into a first query vector, and the second representation vector into a first key vector and a first value vector — S151

↓

The execution device calculates an attention score of the first query vector and the first key vector by using an attention mechanism, to obtain a first attention score — S152

↓

The execution device obtains, based on the first value vector, the first attention score, and the first representation vector, a fused representation vector corresponding to the data segment of the i$^{th}$ scale — S153

↓

The execution device maps, based on the parameter of the trained interaction module, the second representation vector into a second query vector, and the fused representation vector corresponding to the data segment of the i$^{th}$ scale into a second key vector and a second value vector — S154

↓

The execution device calculates an attention score of the second query vector and the second key vector by using the attention mechanism, to obtain a second attention score — S155

↓

The execution device obtains, based on the second value vector, the second attention score, and the second representation vector, a fused representation vector corresponding to the data segment of the (i+1)$^{th}$ scale — S156

FIG. 15

160

Execution device

Obtaining module — 161

Encoder — 162

Interaction module — 163

FIG. 16

170

Execution device

Antenna

Antenna

Receiver — 171

Receiver — 172

Processor — 173

Memory

Application processor

Communication processor

1731

1732

174

FIG. 17

FIG. 18(a)

FIG. 18(b)

FIG. 18(c)

FIG. 18(d)

190

Training device

Obtaining module — 191

Encoder — 192

Interaction module — 193

Construction module — 194

Optimization module — 195

FIG. 19

2000

Training device

2022 — Central processing unit

Power supply — 2026

2050

Storage media — 2030

Operating system — 2041

Data — 2044

Application — 2042

Memory — 2032

Wired or wireless network port

2058

Input/Output port

FIG. 20

<table>
<tr><td colspan="2">**INTERNATIONAL SEARCH REPORT**</td><td colspan="2">International application No.<br>**PCT/CN2023/084902**</td></tr>
</table>

**A.    CLASSIFICATION OF SUBJECT MATTER**

G06N20/00(2019.01)i;G06N3/04(2023.01)i;G06N3/08(2023.01)i

According to International Patent Classification (IPC) or to both national classification and IPC

**B.    FIELDS SEARCHED**

Minimum documentation searched (classification system followed by classification symbols)

IPC:G06N20/-; G06N3/-

Documentation searched other than minimum documentation to the extent that such documents are included in the fields searched

Electronic data base consulted during the international search (name of data base and, where practicable, search terms used)

CNTXT, CNABS, CNKI: 人工智能, 表示学习, 表征学习, 数据集, 训练, 片段, 大小, 尺寸, 尺度, 向量, 相邻, 邻接, 毗邻, 交互, 融合, 注意力机制 ENTXT, USTXT, VEN: representation learning, Data set, training, data size, adjoin+, fusion, interact +, attention mechanism

**C.    DOCUMENTS CONSIDERED TO BE RELEVANT**

| Category* | Citation of document, with indication, where appropriate, of the relevant passages | Relevant to claim No. |
|---|---|---|
| PX | CN 114997413 A (HUAWEI TECHNOLOGIES CO., LTD.) 02 September 2022 (2022-09-02)<br>    claims 1-31 | 1-31 |
| A | CN 111444379 A (TENCENT TECHNOLOGY (SHENZHEN) CO., LTD.) 24 July 2020 (2020-07-24)<br>    description, paragraphs [0046]-[0085] | 1-31 |
| A | CN 108537342 A (ZHEJIANG UNIVERSITY) 14 September 2018 (2018-09-14)<br>    entire document | 1-31 |
| A | US 2022058531 A1 (ROYAL BANK OF CANADA) 24 February 2022 (2022-02-24)<br>    entire document | 1-31 |

☐ Further documents are listed in the continuation of Box C.        ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **08 May 2023** | **27 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/084902**

| Patent document cited in search report | | | Publication date (day/month/year) | Patent family member(s) | | | Publication date (day/month/year) |
|---|---|---|---|---|---|---|---|
| CN | 114997413 | A | 02 September 2022 | None | | | |
| CN | 111444379 | A | 24 July 2020 | HK | 40026285 | A0 | 08 January 2021 |
| CN | 108537342 | A | 14 September 2018 | None | | | |
| US | 2022058531 | A1 | 24 February 2022 | CA | 3128664 | A1 | 19 February 2022 |

Form PCT/ISA/210 (patent family annex) (July 2022)

**EP 4 521 310 A1**

**Patent documents cited in the description**

- CN 202210551668X